Europäisches Patentamt

European Patent Office

Office européen des brevets

(19)

(11) EP 1 138 868 B1

(12) # EUROPEAN PATENT SPECIFICATION

(45) Date of publication and mention
of the grant of the patent:
**04.10.2006 Bulletin 2006/40**

(51) Int Cl.:
*E06C 5/44* (2006.01)   *B25J 9/16* (2006.01)

(21) Application number: **01107295.6**

(22) Date of filing: **23.03.2001**

(54) **Turntable ladder control**

Drehleiter-Regelung

Contrôle d'échelle orientable

(84) Designated Contracting States:
**AT BE CH CY DE DK ES FI FR GB GR IE IT LI LU
MC NL PT SE TR**

(30) Priority: **31.03.2000 DE 10016136**

(43) Date of publication of application:
**04.10.2001 Bulletin 2001/40**

(73) Proprietor: **IVECO MAGIRUS AG
D-89070 Ulm (DE)**

(72) Inventors:
• **Sawodny, Oliver
89278 Nersingen (DE)**
• **Aschemann, Harald
73340 Amstetten (DE)**
• **Hofer, E. P.
89173 Lonsee (DE)**

(74) Representative: **Gervasi, Gemma et al
Notarbartolo & Gervasi S.p.A.,
Corso di Porta Vittoria, 9
20122 Milano (IT)**

(56) References cited:
**EP-A- 0 206 940      FR-A- 2 670 705**

EP 1 138 868 B1

**EP 1 138 868 B1**

**Description**

The invention relates to a turntable ladder or the like with a control for the movement of the ladder parts, according to the preamble of claim 1.

In particular, the invention relates to a turntable ladder, for example fire brigade ladder or similar devices, such as articulated platforms or telescopic mast platforms and turntable ladder devices. Such devices can generally be rotatably and raisably mounted on a vehicle.

Known turntable ladders are controlled hydraulically or electrohydraulically, for example, by hand levers. In the case of purely hydraulic control, the hand lever deflection is directly converted by the hydraulic control circuit into a proportional control signal for the control block designed- as proportional valve. Dampers in hydraulic control circuit can be used to make the movements less jerky and more smooth. Such dampers cannot, however, be satisfactorily adapted to the entire operating range with very different run-out lengths and angles of elevation. Furthermore, damping of this type generally leads to sluggish response behaviour.

In electrohydraulic controls, the hand lever deflection is initially converted into an electrical signal which is further processed in a control device with microprocessor. The signal is damped in known solutions by ramp functions so the movement of the turntable ladder is less jerky. The processed electrical signal is then passed to hydraulic proportional valves which control the drives of the turntable ladder parts. When selecting the steepness of the ramp functions it is always necessary to make a compromise between damping effect and response behaviour.

In all known solutions, suppression of jerky movements and a degree of vibration damping can only be achieved by accepting a more or less large degree of inertia in the response behaviour.

For example, in EP0206940 a method for the controlling of the movements of a vehicle-mounted ladder, particularly a rescue and firefighting ladder, is disclosed. The method is characterised in that it involves calculating from the signals of sensors a first speed coefficient which is a decreasing function of the developed length of the ladder, a second coefficient which is a decreasing function of the effective load, and a third coefficient which is a decreasing function of the slewing radius of the ladder. According to this document, there is no provision of the suppression of the vibrations of the ladder via a feed back of the calculated values of the horizontal and vertical bending of the ladder to the control inputs of the drives.

On the other hand, it is known from FR2670705 a method for the control of a mechanical system such as a robot arm, wherein there is calculated a digital dynamic model of the system, obtaining then a control model on a trajectory, and elaborating in real time the digital controls of the actuators. The invention allows to avoid disturbing oscillations of a servo-controlled mechanical system with flexible elements. According to this document, the differential equations for describing the movement of the model only include some variables relevant to such movement, and does not consider at all a damping vector relevant to the movement of the arm.

The object of the invention is to create a turntable ladder with a control which induces active vibration damping and does not impair or does not substantially impair the response behaviour.

This object is achieved according to the invention by a turntable ladder or the like with a control according to claim 1.

The control is based on the basic idea of feeding back the bending of the ladder in the horizontal and vertical direction and at least one of the measured variables: angle of elevation, angle of rotation, run-out length and cage mass, via a controller which suitably weights these variables, to the control inputs for the ladder drives.

A dynamic model of the turntable ladder is derived in order to determine the weighing factors. Based on this, the weighting factors, hereinafter designated controller intensification, are determined.

It is particularly advantageous if a decentralised control concept is based on a spatially decoupled dynamic model in which an independent control algorithm is associated with each individual turntable ladder axis. A particularly efficient and maintenance-friendly algorithm is possible as a result.

When expanding the system to path control, a path planning module is implemented to produce the reference variables. The control is supplemented by a pilot control which is based on an inverse dynamic model for path-accurate travel.

Preferred embodiments of the invention will be described in more detail below with the aid of the attached drawings, in which:

Fig. 1 shows the basic mechanical structure of a turntable ladder by way of example

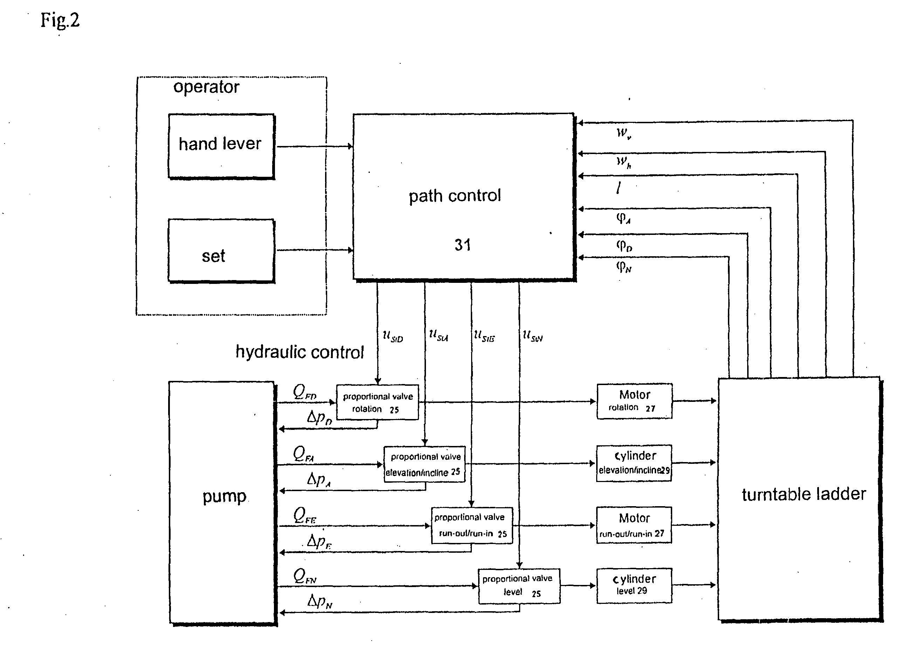

Fig. 2 shows interaction of hydraulic open-loop control and closed-loop control

Fig. 3 shows the entire structure of the path control

Fig. 4 shows the structure of the path planning module

Fig. 5 shows path generation with the fully automatic path planning module by way of example

Fig. 6 shows the structure of the semi-automatic path planning module

Fig. 7 shows the structure of the axis controller for the axis of rotation

Fig. 8 shows the mechanical structure of the axis of rotation and definition of model variables

Fig. 9 shows the structure of the axis controller of the axis of elevation

Fig. 10 shows the mechanical structure of the axis of elevation and definition of model variables

Fig. 11 shows elevation kinematics of the axis of elevation

Fig. 12 shows the structure of the axis controller of the run-out axis

Fig. 13 shows the structure of the axis controller of the level axis.

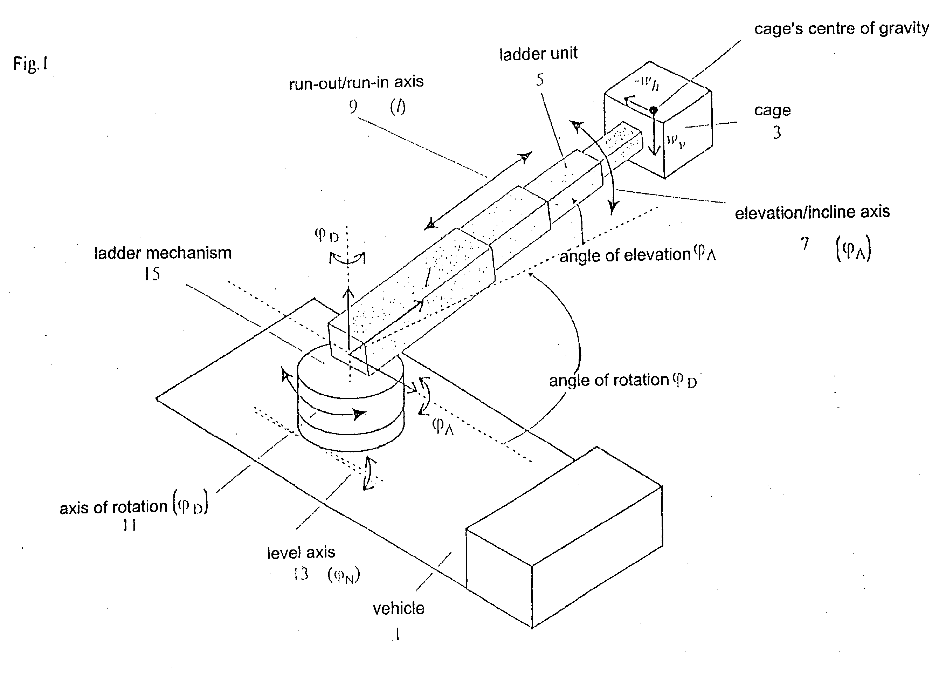

Fig. 1 shows the basic mechanical structure of a turntable ladder or the like. The turntable ladder is generally mounted on a vehicle 1. To position the cage 3 in the work environment,-the ladder unit 5 can be tilted with the elevation/incline axis 7 by the angle $\varphi_A$. The ladder length 1 can be varied with the run-out/run-in axis 9. The rotation axis 11 allows orientation by the angle $\varphi_D$ about the vertical axis. In the case of a vehicle which is not standing horizontally, an undesirable additional incline can be compensated with the level axis 13 upon rotation of the ladder unit by tilting the ladder mechanism 15 by the angle $\varphi_N$.

Generally, the turntable ladder has a hydraulic drive system 21. It consists of the hydraulic pump 23 driven by the travel motor, the proportional valves 25 and the hydraulic motors 27 and hydraulic cylinders 29. The hydraulic control is generally equipped with systems with subordinate conveying power control for the hydraulic circuits with load-sensing properties. It is essential in this case that the control voltages $u_{StD}$, $u_{StA}$, $u_{StN}$, $u_{StE}$ at the proportional valves are converted by the subordinate conveying power control into proportional conveying powers $Q_{FD}$, $Q_{FA}$, $Q_{FN}$, $Q_{FE}$ in the corresponding hydraulic circuit.

It is accordingly essential that the bending of the ladder in the horizontal direction and in the vertical direction and at least one of the measured variables: angle of elevation, angle of rotation, run-out length and cage mass, are fed back via the controller. Vibrations of the ladder parts which occur can be damped, in particular by feedback of the measured variables: horizontal and vertical bending, to the control inputs of the drives.

If the control is expanded to path control, great importance is attached, in addition to the feedback, to the way in which the reference variables are passed to the control inputs of the drives.

As a result, the time functions for the control voltages of the proportional valves are no longer derived directly from the hand levers, for example by ramp functions, and passed to the control inputs but are calculated in the path control 31 in such a way that no vibrations occur when the ladder is moved and the cage follows the desired path in the work environment.

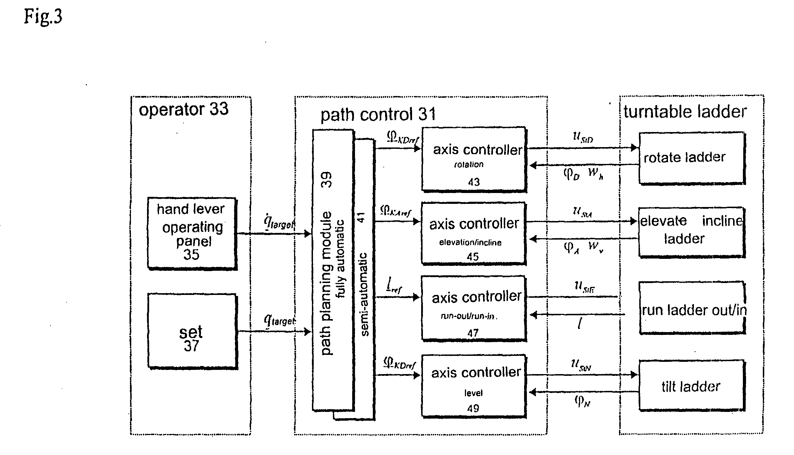

The basis for this is a dynamic model of the turntable ladder system with the aid of which this object is achieved based on the sensor data of at least one of the variables $w_v$, $w_h$, l, $\varphi_A$, $\varphi_D$, $\varphi_N$ and the reference presets $\underline{\dot{q}}_{target}$ or $\underline{q}_{target}$. Initially, the entire structure (Fig. 3) of the path control 31 will be explained below.

The operator preselects the target speeds or the destinations either via the hand lever 35 at the operating panels or via a set matrix 37 which has been stored in the computer in a previous turntable ladder run. By taking into account the kinematic restrictions (maximum velocity, acceleration and jerk) of the turntable ladder the fully automatic or semi-automatic path planning module (39 or 41) calculates therefrom the time functions of the set cage position with regard to the axes of rotation, elevation and run-out and their derivatives combined in the vectors $\underline{\varphi}_{KDref}$, $\underline{\varphi}_{KAref}$, $\underline{l}_{ref}$. The set position vectors are passed to the axis controllers 43, 45, 47 and 49 which calculate the control functions $u_{StD}$, $u_{StA}$, $u_{StE}$, $u_{StN}$ for the proportional valves 25 of the hydraulic drive system 21 therefrom by evaluating at least one of the sensor values $w_v$, $w_h$, l, $\varphi_A$, $\varphi_D$, $\varphi_N$.

It is, however, also possible to generate the reference variables from the hand lever signals by ramp functions instead of the path planning module and to pass these directly to the axis controller. The quality of the vibration damping is somewhat lower as a result.

The individual components of the path control will now be described hereinafter in more detail.

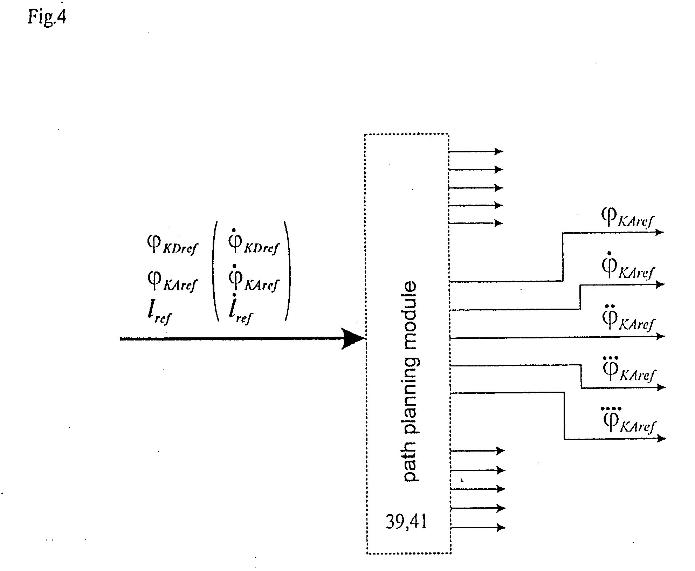

Fig. 4 shows the interfaces of the path planning module 39 or 41. In the case of the fully automatic path planning module 39, the target position vector for the centre of the cage is input in the form of coordinates $\underline{q}_{target}= [\varphi_{KDtarget},$

$\varphi_{KAtarget}$, $l_{target}]^T$. $\varphi_{KDtarget}$ is the target angle coordinate in the direction of the axis of rotation 11 for the centre of the cage. $\varphi_{KAtarget}$ is the target angle coordinate in the direction of the elevation/incline axis 7 for the centre of the cage. $l_{target}$ is the target position in the direction of the run-out/in axis 9 for the centre of the cage. In the case of the semi-automatic path planning module 41, the target velocity vector $\underline{\dot{q}}_{target} = [\dot{\varphi}_{KDtarget}, \dot{\varphi}_{KAtarget}, \dot{l}_{target}]^T$ is input variable. The components of the target velocity vector are similar to those of target position vector: the target velocity in the direction of the axis of rotation $\dot{\varphi}_{KDtarget}$, following the target velocity of the elevation/incline axis $\dot{\varphi}_{KAtarget}$ and the run-out or run-in velocity of the ladder unit $\dot{l}_{target}$. The time function vectors for the cage position in relation to the angle of rotation coordinate and its derivatives $\underline{\varphi}_{KDref}$, for the cage position in relation to the angle of elevation coordinate and its derivatives $\underline{\varphi}_{KAref}$ and for the cage position in relation to the run-out length and its derivatives $\underline{l}_{Kref}$ are calculated from these preset variables in the path planning module 39 or 41. Each vector comprises a maximum of five components up to the fourth derivative. In the case of the elevation/incline axis, the individual components are:

$\varphi_{KAref}$:     set angle position centre of cage in the direction of angle of elevation

$\dot{\varphi}_{KAref}$:     set angular velocity centre of cage in the direction of angle of elevation

$\ddot{\varphi}_{KAref}$:     set angular acceleration centre of cage in the direction of angle of elevation

$\dddot{\varphi}_{KAref}$:     set jerk centre of cage in the direction of angle of elevation

$\ddddot{\varphi}_{KAref}$:     derivative set jerk centre of cage in the direction of angle of elevation

The vectors for the axis of rotation and run-out are established in the same way.

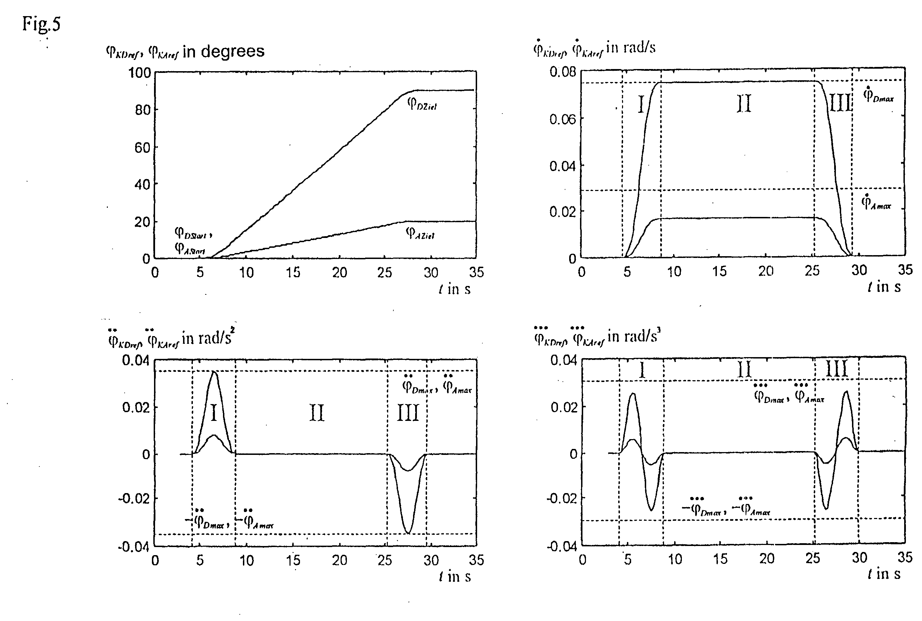

Fig. 5 shows, by way of example, the generated time functions for the set angle positions $\varphi_{KD}$, $\varphi_{KA}$, set angular velocitys $\dot{\varphi}_{KD}$, $\dot{\varphi}_{KA}$, set angular accelerations $\ddot{\varphi}_{KD}$, $\ddot{\varphi}_{KA}$ and set jerk $\dddot{\varphi}_{KD}$, $\dddot{\varphi}_{KA}$ from the fully automatic path planning module for a movement with the axis of rotation and elevation/incline from the starting point $\varphi_{KDstart} = 0°$, $\varphi_{KAstart} = 0°$ to the destination $\varphi_{KDtarget} = 90°$, $\varphi_{KAtarget} = 20°$. The time functions are calculated in this case such that none of the preset kinematic restrictions, such as the maximum angular velocities $\dot{\varphi}_{Dmax}$, $\dot{\varphi}_{Amax}$, the maximum angular accelerations $\ddot{\varphi}_{Dmax}$, $\ddot{\varphi}_{Amax}$ or the maximum jerk $\dddot{\varphi}_{Dmax}$, $\dddot{\varphi}_{Amax}$ is exceeded. For this purpose, the movement is divided into three phases: an acceleration phase I, a phase of constant velocity II, which can also be dispensed with, and a deceleration phase III. A polynomial of the third order is assumed for the phases I and III as time function for the jerk. A constant velocity is always assumed as time function for the phase II. By integrating the jerk function, the missing time functions for the acceleration, velocity and position are calculated. The coefficients in the time functions which are still vacant are determined by the marginal conditions at the start of the movement, at the transition points to the next or preceding movement phase or at the destination, and the kinematic restrictions, wherein all kinematic conditions must be checked in relation to each axis. In the case of the example in Fig. 5, the kinematic restriction of the maximum acceleration for the axis of rotation $\ddot{\varphi}_{Dmax}$ acts in a limiting fashion in phase I and III, in phase II it is the maximum velocity of the axis of rotation $\dot{\varphi}_{Dmax}$. The other axes are synchronised with the axis limiting the movement in view of the duration of travel. The time optimality of the movement is achieved in that the minimum total duration of travel is determined in an optimisation sequence by varying the proportion of the acceleration and deceleration phase to the entire movement.

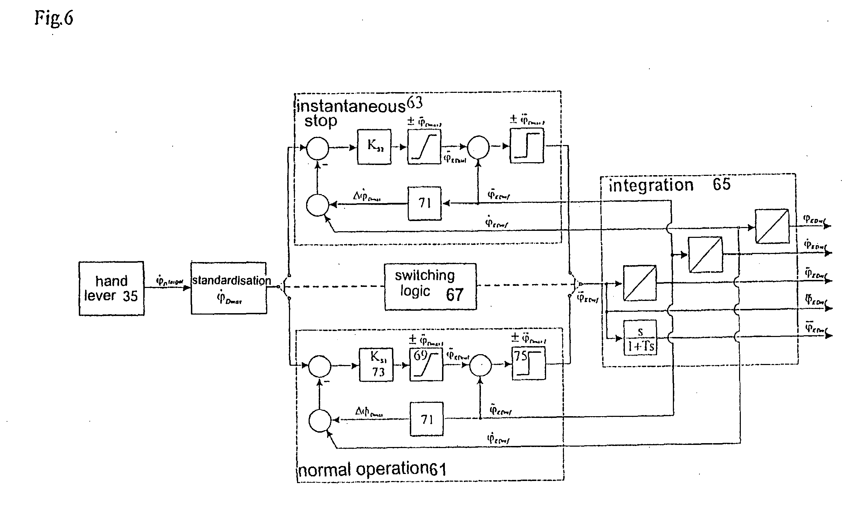

Fig. 6 shows the detail relating to the axis of rotation from the structure of the semi-automatic path planner. The target velocity of the cage $\dot{\varphi}_{KDtarget}$ is initially standardised to the value range of the maximum achievable velocity $\dot{\varphi}_{Dmax}$ by the hand lever of the operating panel. As a result, the maximum velocity is not exceeded. The semi-automatic path planner consists of two steepness limiters of the second order per axis, one for normal operation 61 and one for instantaneous stop 63, between which the switching logic 67 can be switched back and forth. The time functions at the output are formed by integration 65. The signal flow in the semi-automatic path planner will now be described with the aid of Fig. 6.

A set value-actual value difference between the target velocity $\dot{\varphi}_{KDtarget}$ and the current set velocity $\dot{\varphi}_{KDref}$ is initially formed in the steepness limiter for normal operation 61. The difference is intensified by the constants $K_{S1}$ (block 73) and produces the target acceleration $\ddot{\varphi}_{KDtarget}$. A limiting member 69 connected downstream, limits the value to the maximum acceleration $\pm \ddot{\varphi}_{Dmax}$. In order to improve the dynamic behaviour, it is taken into account when forming the set-actual value difference between target velocity and current set velocity that only the maximum change in velocity

$$\Delta\dot{\varphi}_{D\max} = \frac{\ddot{\varphi}_{KDref}\left|\ddot{\varphi}_{KDref}\right|}{2\dddot{\varphi}_{D\max}} \tag{1}$$

which is calculated in block 71 can be achieved owing to the jerk limitation $\pm\dddot{\varphi}_{Dmax}$ at the current set acceleration $\ddot{\varphi}_{KDref}$. Therefore, this value is added to the current set velocity $\dot{\varphi}_{KDref}$, whereby the dynamics of the entire system is improved. The target acceleration $\ddot{\varphi}_{KDtarget}$ is then behind the limiting element 69. A set-actual value difference is in turn formed with the current set acceleration $\ddot{\varphi}_{KDref}$. The set jerk $\dddot{\varphi}_{KDref}$ in accordance with

$$\dddot{\varphi}_{KDref} = \begin{cases} +\dddot{\varphi}_{D\max} & for \ \ddot{\varphi}_{KDt\,arget} - \ddot{\varphi}_{KDref} > 0 \\ 0 & for \ \ddot{\varphi}_{KDt\,arget} - \ddot{\varphi}_{KDref} = 0 \\ -\dddot{\varphi}_{D\max} & for \ \ddot{\varphi}_{KDt\,arget} - \ddot{\varphi}_{KDref} < 0 \end{cases} \tag{2}$$

is formed therefrom in characteristic block 75. The block-shaped characteristic of this function is attenuated by filtration. The set acceleration $\ddot{\varphi}_{KDref}$, the set velocity $\dot{\varphi}_{KDref}$, and the set position $\varphi_{KDtarget}$ are determined by integration in block 65 from the just calculated set jerk function $\dddot{\varphi}_{KDref}$. The derivative of the set jerk is determined by differentiation in block 65 and simultaneous filtration from the set jerk $\dddot{\varphi}_{KDref}$.

During normal operation, the kinematic restrictions $\ddot{\varphi}_{Dmax}$ and $\dddot{\varphi}_{Dmax}$ and the proportional intensification $K_{S1}$ are input such that a subjectively pleasant and smooth dynamic mode of behaviour is produced for the passenger in the cage when the turntable ladder is actuated. This means that maximum jerk and acceleration are set so as to be somewhat lower than the mechanical system would allow. However, the after-run of the system is high, in particular at high speeds of travel. In other words, if the operator inputs the target velocity 0 at full velocity, the turntable ladder then requires a few seconds until it comes to a standstill. As such inputs are made, in particular, in an emergency where there is a threat of collision, a second operating mode is introduced which provides an instantaneous stop of the turntable ladder. For this purpose, a second steepness limiter 63, which has an identical design in terms of structure, is connected in parallel with the steepness limiter for normal operation 61. However, the parameters which determine the after-run are increased up to the mechanical loadability limits of the turntable ladder. Therefore, this steepness limiter is parameterised with the maximum instantaneous stop acceleration $\ddot{\varphi}_{Dmax2}$ and the maximum instantaneous stop jerk $\dddot{\varphi}_{Dmax2}$ and the instantaneous stop proportional intensification $K_{S2}$. A switching logic 67 switches back and forth between the two steepness limiters, which circuit identifies the emergency stop from the hand lever signal. The output of the instantaneous stop steepness limiter 63 is, as with the steepness limiter for normal operation, the set jerk $\dddot{\varphi}_{KDref}$. The other time functions are calculated in the same way as in normal operation in block 65.

As a result, by taking into account the kinematic restrictions, the time functions for the set position of the cage in the direction of rotation and its derivative are present at the output of the semi-automatic path planner as in the fully automatic path planner.

The time functions are passed to the axis controller. It is essential in this case that, with regard to vibration damping of the ladder parts, the function of the axis controller is independent of the generation of reference variables. In other words, by feeding back at least one of the measured variables: bending of the ladder in the horizontal direction, bending of the ladder in the vertical direction, angle of elevation, angle of rotation, run-out length and cage mass, via the status controller module, a vibration-damping effect is also achieved without application of a reference value. Path planning module and pilot control are required if path-accurate travel is to be achieved.

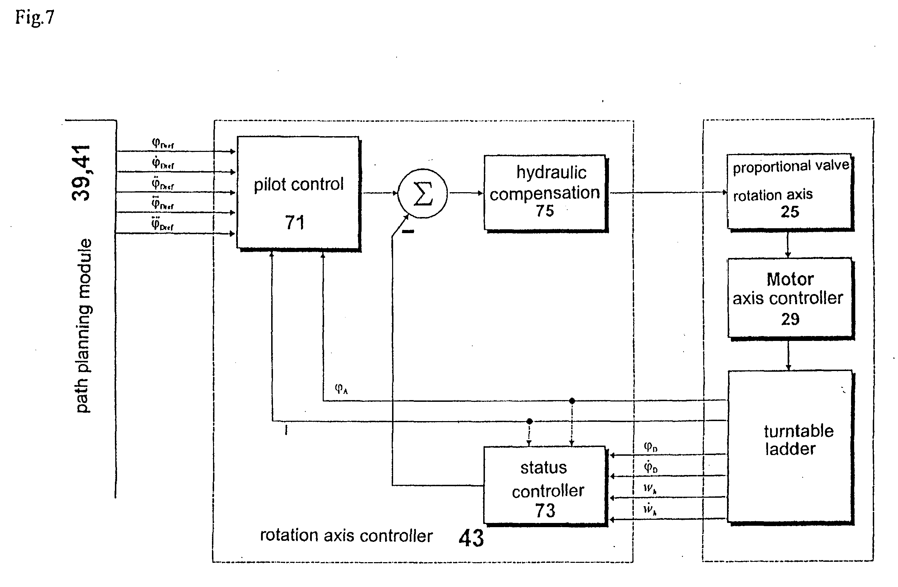

Initially, the structure of the axis controller for the axis of rotation will be described with the aid of Fig. 7.

The output functions of the path planning module in the form of set cage position in the direction of rotation and its derivatives (velocity, acceleration, jerk and derivative of the jerk) are passed to the pilot control block 71. In the pilot control block these functions are intensified in such a way that path-accurate travel of the ladder without vibrations results under the idealised preconditions of the dynamic model. The basis for determining the pilot control intensifications is the dynamic model which is derived in the subsequent sections for the axis of rotation. Therefore, vibration of the turntable ladder is suppressed under these idealised preconditions and the cage follows the path generated.

If the set velocity is passed to the axis controller via a ramp function only, then standardisation of this signal in the pilot control to the maximum admissible velocity is sufficient.

In order to suppress vibrations of the ladder parts and to position the turntable ladders at a destination, at least one of the measured variables: angle of rotation $\varphi_D$, rotational angular velocity $\dot{\varphi}_D$, bending of the ladder unit in the horizontal direction (direction of rotation) $w_h$ or the derivative of the bending $\dot{w}_h$ is intensified by the status controller block 73 and fed back to the control input. The derivative of the measured variables $\varphi_D$ and $w_h$ is formed numerically in the microprocessor control.

As the hydraulic drive units are characterised by non-linear dynamic properties (hysteresis, play), the value for the control input $u_{Dref}$ formed from pilot control and optionally status controller output is altered in the hydraulic compensation block 75 in such a way that linear behaviour of the entire system can be assumed. The output of the block 75 (hydraulic compensation) is the corrected control variable $u_{StD}$. This value is then passed to the proportional valve of the hydraulic circuit for the axis of rotation.

The derivation of the dynamic model for the axis of rotation will now serve to explain the mode of operation in detail, which derivation is the basis for calculating the pilot control intensifications and the status controller.

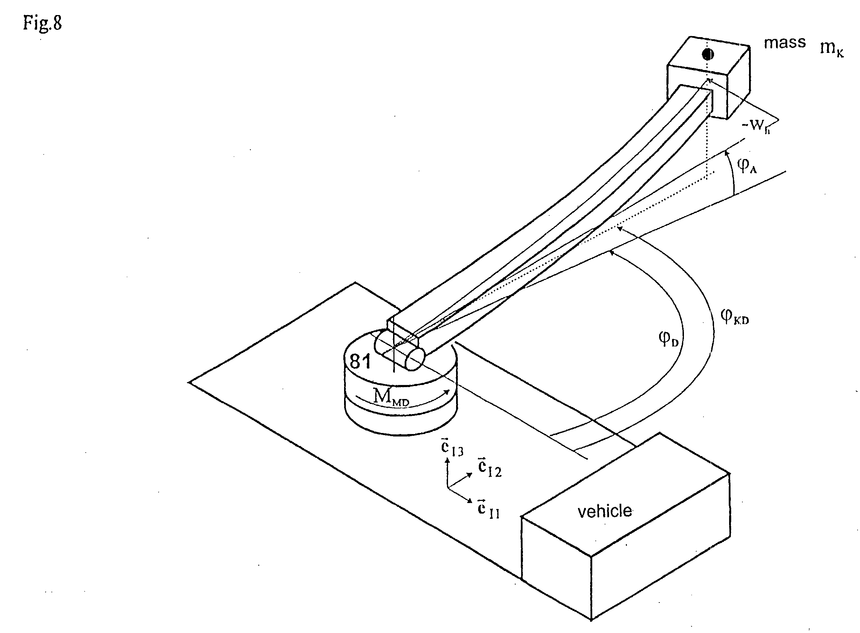

For this purpose, Fig. 8 provides descriptions for the definition of the model variables. The connection shown there between the position of rotation $\varphi_D$ of the ladder mechanism in relation to the inertial system with the unit vectors $\underline{e}_{11}$ to $\underline{e}_{13}$ and the cage position of rotation $\varphi_{KD}$, which, owing to bending $w_h$, is calculated in accordance with the equation

$$\varphi_{KD} = \varphi_D - \frac{w_h}{l} \qquad (3)$$

for small bends, is essential in this case. l is the ladder length here. This dynamic system can be described by the following differential equations

$$(J_D(l) + m_k l^2) \cos^2\varphi_A \cdot \ddot{\varphi}_D - ml\cos\varphi_A \cdot \ddot{w}_h = M_{MD} - b_D \dot{\varphi}_D$$

$$-ml\cos\varphi_A \cdot \ddot{\varphi}_D + m \cdot \ddot{w}_h + b_{DL} \cdot \dot{w}_h + c_{DL}(l) \cdot w_h = 0 \qquad (4)$$

$J_D$ is the moment of inertia of the ladder mechanism and the ladder unit about the axis of rotation. $m_K$ is the mass of the cage, m is the reduced mass which is produced from the model observation that the homogenous mass distribution of the ladder unit is reduced to two point masses. The one point mass is reduced on the centre of rotation in the ladder mechanism, the second point mass is the centre of the cage. Accordingly, the reduced mass is calculated from the total mass of the ladder unit $m_L$ in accordance with $m = m_L\alpha$. The parameter $\alpha$ is determined from frequency response measurements. $M_{MD}$ is the driving motor torque. $b_D$ is the viscous friction of the turntable drive. The first equation of (4) substantially describes the movement equation for the turntable ladder mechanism, the reaction owing to bending of the ladder unit on the turntable ladder mechanism being taken into account. The second equation of (4) is the movement equation which describes the bending $w_h$, stimulation of the bending vibration being caused by rotation of the ladder unit via the angular acceleration of the turntable ladder mechanism or an external disturbance, expressed by initial conditions for these differential equations. In the second equation of (4) the parameter $c_{DL}$ is the stiffness of the ladder unit and $b_{DL}$ the damping constant for the ladder vibration. A function is calculated for the stiffness as a function of l from FEM simulations as this stiffness is highly dependent on the run-out state of the ladder unit l. Therefore, $c_{DL}(1)$ is always to be assumed hereinafter for $c_{DL}$. This also applies to the moment of inertia $J_D$ calculated from constructional data which is also a function dependent on 1.

The hydraulic drive is described by the following equations.

$$M_{MD} = i_D \frac{V}{2\pi} \Delta p_D \qquad \Delta p_D = K_{compr} \dot{Q}_{CD}$$

$$Q_{CD} = Q_{FD} - i_D \frac{V}{2\pi} \dot{\varphi}_D$$

$$Q_{FD} = K_{PD} u_{StD} \qquad K_{compr} = \frac{1}{V\beta} \tag{5}$$

$i_D$ is the transmission ratio between motor velocity and rotational velocity of the ladder mechanism. V is the absorption volume of the hydraulic motor. $\Delta p_D$ is the pressure drop across the hydraulic drive motor, $\beta$ is the oil compressibility, $Q_{CD}$ is the compressibility power, $Q_{FD}$ is the conveying power in the hydraulic circuit for rotation and $K_{PD}$ is the proportionality constant which produces the connection between conveying power and control voltage of the proportional valve. Dynamic effects of the subordinate conveying power control are ignored.

The equations can now be transformed into a status representation (see also O. Föllinger: Regelungstechnik, [Control Engineering], 7th Edition, Hüthig Verlag, Heidelberg, 1992). The following status representation of the system is produced:

```
status representation:    ẋ_D  =  A_D x_D  +  B_D u_D

                          y_D  =  C_D x_D                    (6)
```

with:

$$\text{status vector:} \qquad \underline{x}_D = \begin{bmatrix} w_h \\ \dot{w}_h \\ \varphi_D \\ \dot{\varphi}_D \\ M_{MD} \end{bmatrix} \tag{7}$$

$$\text{control variable:} \qquad u_D = u_{StD} \tag{8}$$

$$\text{output variable:} \qquad y_D = \varphi_{KD} \tag{9}$$

system matrix:

$$\underline{A}_D = \begin{bmatrix} 0 & 1 & 0 & 0 & 0 \\ -\dfrac{c_{DL}J_{DK}}{m(J_{DK}-ml^2)} & -\dfrac{b_{DL}J_{DK}}{m(J_{DK}-ml^2)} & 0 & -\dfrac{b_D l}{\cos\varphi_A(J_{DK}-ml^2)} & \dfrac{l}{\cos\varphi_A(J_{DK}-ml^2)} \\ 0 & 0 & 0 & 1 & 0 \\ -\dfrac{c_{DL}l}{\cos\varphi_A(J_{DK}-ml^2)} & -\dfrac{b_{DL}l}{\cos\varphi_A(J_{DK}-ml^2)} & 0 & -\dfrac{b_D}{\cos^2\varphi_A(J_{DK}-ml^2)} & \dfrac{1}{\cos^2\varphi_A(J_{DK}-ml^2)} \\ 0 & 0 & 0 & -i_D^2\dfrac{l}{4\pi^2\beta} & 0 \end{bmatrix} \tag{10}$$

$$J_{DK}(l) = J_D(l) + m_K l^2$$

$$\text{control vector:} \quad \underline{B}_D = \begin{bmatrix} 0 \\ 0 \\ 0 \\ 0 \\ \dfrac{i_D K_{PD}}{2\pi\beta} \end{bmatrix} \tag{11}$$

$$\text{output vector:} \quad \underline{C}_D = \begin{bmatrix} -\dfrac{1}{l} & 0 & 1 & 0 & 0 & 0 \end{bmatrix} \tag{12}$$

The dynamic model of the axis of rotation is regarded as a variable-parameter system in relation to the run-out length 1 and the angle of elevation $\varphi_A$. The equations (6) to (12) are the basis for the design of the pilot control 71 and the status controller 73 now described.

The controller feedback 73 is designed as status controller. A status controller is characterised in that every status variable, i.e. every component of the status vector $\underline{x}_D$, is weighted with a control intensification $k_{iD}$ and fed back to the control input of the path. The control intensifications $k_{iD}$ are combined to form the control vector $\underline{K}_D$.

Owing to the introduction of the status controller block 73 with the feedback to the control input

$$u_{Dref} = -u_{Djerk} \tag{12b}$$

equation 6 changes to:

$$\underline{\dot{x}}_D = (\underline{A}_D - \underline{B}_D \underline{K}_D)\underline{x}_D \tag{12a}$$

$$\underline{y}_D = \underline{C}_D \underline{x}_D$$

According to "Unbehauen, Regelungstechnik 2 [Control Engineering 2], *loc cit"* the dynamic behaviour of the system is determined by the position of the inherent values of the system matrix $\underline{A}_D$, which are simultaneously poles of the transmission function in the frequency range. The inherent values of the matrix can be determined from the determinants by calculating the zero positions in relation to the variables s of the characteristic polynomial as follows:

$$\det(s\underline{I}-\underline{A}_D) \equiv 0 \qquad (29)$$

$\underline{I}$ is the unit matrix. It is of no consequence in this case whether there is a reference variable or not. This can be set at zero without limiting the generality. Evaluation of (29) produces, in the case of the selected status model according to equations 6 to 12, a polynomial of the fifth order of the form:

$$s^5 + a_4 s^4 + a_3 s^3 + a_2 s^2 + a_1 s + a_0 \equiv 0 \qquad (30)$$

By feeding back the status variables via the controller matrix $\underline{K}_D$ to the control input, these inherent values can be specifically displaced as the position of the inherent values is now determined by evaluation of the following determinants:

$$\det(s\underline{I} - \underline{A}_D + \underline{B}_D \cdot \underline{K}_D \equiv 0 \qquad (31)$$

Evaluation of (31) again produces a polynomial of the fifth order which now depends, however, on the controller intensifications $k_{iD}$ (i = 1..5). In the case of the model according to equations 6 to 12, (30) becomes

$$s^5 + a_4(k_{5D},) s^4 + a_3(k_{5D} \cdot k_{4D}, k_{2D}) s^3 + a_2(k_{5D}, k_{4D}, k_{3D}, k_{1D}) s^2$$
$$+ a_1(k_{5D}, k_{4D}, k_{3D}) s + a_0 (k_{3D}) \equiv 0 \qquad (32)$$

It is now demanded that, owing to the controller intensifications $k_{iD}$, equations 31 and 32 assume certain zero positions in order to influence the dynamics of the system in a targeted manner, which dynamics are reflected in the zero positions of this polynomial. As a result, an input for this polynomial according to:

$$p(s) = \prod_{i=1}^{n} (s-r_i) \qquad (33)$$

is produced, n being the system ordering with which the dimension of the status vector is to be equated. In the case of the model according to equations 6 to 12, n = 5 and therefore p(s):

$$p(s) = (s-r_i)(s-r_2)(s-r_3)(s-r_4)(s-r_5) = s^5 + p_4 s^4 + p_3 s^3 + p_2 s^2 + p_1 s^1 + p_0 \qquad (34)$$

The $r_i$ are selected in such a way that the system is stable, the control operates sufficiently quickly with good damping and the control variable restriction is not achieved with typically occurring control deviations. The $r_i$ can be determined in accordance with these criteria prior to commissioning in simulations.
The control intensifications can now be determined by coefficient comparison of the polynomials of equations 31 and 33.

$$\det(s\underline{I} - \underline{A}_D + \underline{B}_D \cdot \underline{K}_D) \equiv \prod_{i=1}^{n} (s-r_i) \qquad (35)$$

In the case of the model according to equations 6 to 12, the following linear equation system is produced as a function of the control intensifications $k_{iD}$:

$$
\begin{aligned}
a_4(k_{5D}) - p_4 &= 0 \\
a_3(k_{5D}, k_{4D}, k_{2D}) - p_3 &= 0 \\
a_2(k_{5D}, k_{4D}, k_{3D}, k_{1D}) - p_2 &= 0 \\
a_1(k_{5D}, k_{4D}, k_{3D}) - p_1 &= 0 \\
a_0(k_{3D}) - p_0 &= 0
\end{aligned}
\tag{36}
$$

Evaluation of the above equation system (36) now provides analytical mathematical expressions for the controller intensifications as a function of the desired poles $r_i$ and the system parameters. In the case of model according to equations 6 to 12 the system parameters are $K_{PD}$, $i_D$, V, l, $\varphi_A$, $\beta$, $J_D$, m, $m_K$, $c_{DL}$, $b_{DL}$, $b_D$. An advantage of this controller design is that parameter changes in the system, such as the run-out length 1 or the angle of elevation $\varphi_A$ can be taken into account immediately in altered controller intensifications. This is of critical importance for optimised control behaviour.
As a complete status controller demands knowledge of all status variables, it is advantageous to design the control as output feedback instead of a status observer. This means that not all status variables are fed back via the controller, but only those which are detected by measurements. There are therefore individual $k_{iD}$ at zero. In the case of the model according to equations 6 to 12, measurement of the drive moment of the axis of rotation motor can, for example, be dispensed with. Therefore, $k_{5D} = 0$. $k_{1D}$ to $k_{4D}$ can be calculated according to equation (36) despite this. In addition, it can be sensible to calculate the controller parameters owing to the not inconsiderable degree of calculation complexity for a single operating point. Subsequently however, the actual inherent value position of the system with the controller matrix

$$
\underline{K}_D = [k_{1D} \ k_{2D} \ k_{3D} \ k_{4D} \ 0]
\tag{37}
$$

must be numerically checked by means of the calculation from equation 31. As this can only be done numerically, the entire expanse covered by the changing system parameters must be incorporated. In this case, the changing system parameters would be l and $\varphi_A$. These parameters fluctuate in the interval [$l_{min}$, $l_{max}$] and [$\varphi_{Amin}$, $\varphi_{Amax}$] . In other words, a plurality of support points $l_i$ and $\varphi_{Aj}$ must be chosen in these intervals and the system matrix $\underline{A}_{ij}(l_i, \varphi_{Aj})$ calculated for all possible combinations of these changing system parameters and inserted in equation 31 and evaluated with $\underline{K}_D$ from equation 37:

$$
\det(s\underline{I} - \underline{A}_{ij} + \underline{B} \cdot \underline{K}_D) \equiv 0 \text{ for all } i.j
\tag{38}
$$

If all zero positions of (38) are always less than zero, the stability of the system is ensured and the originally selected poles $r_i$ can be retained. If this is not the case, then a correction of the poles $r_i$ according to equation (33) may be necessary.
Upon feedback of $w_h$, $\dot{w}_h$, $\varphi_D$, $\dot{\varphi}_D$ the output of the status controller block 73 is then

$$
u_{Djerk} = k_{1D} \ w_h + k_{2D} \ \dot{w}_h + k_{3D} \ \varphi_D + k_{4D} \ \dot{\varphi}_D
\tag{39}
$$

A block for pilot control 71 can now be added to the status controller block 73 in order to allow path-accurate travel in addition to the active vibration damping.
For the design of the pilot control block 71, equation 12a is to be expanded by the portion for producing the reference variable

$$\dot{\underline{x}}_D = (\underline{A}_D - \underline{B}_D\underline{K}_D)\underline{x}_D + \underline{B}_D\underline{S}_D\underline{w}_D$$

$$\underline{y}_D = \underline{C}_D\underline{x}_D \qquad (24)$$

Input variables of the pilot control block 71 are the set angle position $\varphi_{KDref}$, the set angular velocity $\dot{\varphi}_{KDref}$, the set angular acceleration $\ddot{\varphi}_{KDref}$, the set jerk $\dddot{\varphi}_{KDref}$ and optionally the derivative of the set jerk. The reference variable $\underline{w}_D$ is therefore

$$\underline{w}_D = \begin{bmatrix} \varphi_{KDref} \\ \dot{\varphi}_{KDref} \\ \ddot{\varphi}_{KDref} \\ \dddot{\varphi}_{KDref} \\ \left( \ddddot{\varphi}_{KDref} \right) \end{bmatrix} \qquad (13)$$

The components of $\underline{w}_D$ are weighted with the pilot control intensifications $K_{VD0}$ to $K_{VD4}$ in the pilot control block 71 and their sum is passed to the control input. Therefore, the pilot control matrix becomes

$$\underline{S}_D = [K_{VD0} \ k_{VD1} \ K_{VD2} \ K_{VD3} \ K_{VD4}] \qquad (15)$$

If the matrix equation (24) is evaluated then it can be written as algebraic equation for the pilot control block, wherein $u_{Dpilot}$ is the uncorrected set control voltage for the proportional valve based on the idealised model.

$$u_{Dpilot} = K_{VD0}\varphi_{KDref} + K_{VD1}\dot{\varphi}_{KDref} + K_{VD2}\ddot{\varphi}_{KDref} + K_{VD3}\dddot{\varphi}_{KDref} (+K_{VD4}\ddddot{\varphi}_{KDref})$$

$$(16)$$

$K_{VD0}$ to $K_{VD4}$ are the pilot control intensifications which are calculated as a function of the current angle of elevation $\varphi_A$ and the run-out length I of the ladder unit such that the cage follows the set trajectory path-accurately without vibrations.

The pilot control intensifications $K_{VD0}$ to $K_{VD4}$ are calculated as follows. In relation to the cage angle $\varphi_{KD}$ control variable, the transmission function can be calculated, without pilot control block, as follows from the status equations (6) to (12) in accordance with the equation

$$G_{DR}(s) = \frac{\varphi_{KD}(s)}{u_{Dpilot}(s)} = \underline{C}_D(s\underline{I} - \underline{A}_D + \underline{B}_D\underline{K}_D)^{-1} \underline{B}_D \qquad (25)$$

In the case of the axis of rotation, the transmission function is

$$G_{DR}(s) = \frac{2\pi K_{PD}i_D(m(\cos\varphi_A - 1)s^2 + b_{DL}s + c_{DL})}{4\pi^2\beta m\cos^2\varphi_A(J_D - ml^2 + m_Kl^2)s^5 + 4\pi^2\beta(b_{DL}\cos^2\varphi_A(J_D + m_Kl^2) + mb_D)s^4 +}$$

$$\beta 4\pi^2(c_{DL}\cos^2\varphi_A(J_D + m_Kl^2) + b_Db_{DL} + m\frac{i_D^2V}{\beta 4\pi^2} + \frac{mi_DK_{PD}(k_{4D} + k_{2D}l\cos\varphi_A)}{2\pi\beta})s^3$$

$$+ 4\pi^2\beta(b_Dc_{DL} + b_{DL}\frac{i_D^2V}{\beta 4\pi^2} + \frac{K_{PD}i_D(b_{DL}k_{4D} + lm\cos\varphi_A k_{1D} + mk_{3D})}{2\pi\beta})s^2 +$$

$$(c_{DL}i_D^2l + 2\pi K_{PD}i_D(b_{DL}k_{3D} + c_{DL}k_{4D})s + 2\pi K_{PD}i_Dc_{DL}k_{3D}$$

$$(26)$$

in the case of feedback of the variables $w_h$, $\dot{w}_h$, $\varphi_D$, $\dot{\varphi}_D$.

The variables $k_{1D}$, $k_{2D}$, $k_{3D}$, $k_{4D}$ are the controller intensifications of the status controller which the variables $w_h$, $\dot{w}_h$, $\varphi_D$, $\dot{\varphi}_D$ feed back suitably weighted to the control input.

To calculate the pilot control intensifications $K_{Vdi}$ ($K_{VD0}$ to $K_{VD4}$) (26) is, in turn, initially expanded by the product of the reference variables.

$$G_{VDR}(s) = \frac{\varphi_{KD}}{\varphi_{KDref}} = G_{DR}(s) \cdot (K_{VD0} + K_{VD1}s + K_{VD2}s^2 + K_{VD3}s^3 + K_{VD4}s^4)$$

$$(27)$$

Ideal system behaviour in relation to position, the velocity, the acceleration, the jerk and optionally the derivative of the jerk is precisely produced when the transmission function of the entire system of pilot control and transmission function of the axis of rotation of the turntable ladder according to equation 27 satisfies the following condition in its coefficients $b_i$ and $a_i$.

$$\frac{b_0}{a_0} = 1$$

$$\frac{b_1}{a_1} = 1$$

$$\frac{b_2}{a_2} = 1$$

$$\frac{b_3}{a_3} = 1$$

$$\frac{b_4}{a_4} = 1$$

$$(21)$$

This produces a linear equation system which can be resolved in analytical form according to the pilot control intensifications $K_{VD0}$ to $K_{VD4}$ sought.

The coefficients $b_i$ and $a_i$ are, in addition to the pilot control intensifications $K_{VD0}$ to $K_{VD4}$ sought, now also dependent on the known controller intensifications $k_{1D}$, $k_{2D}$, $k_{3D}$, $k_{4D}$ of the status controller.

While taking into account the status controller block 73 the following are obtained

$$K_{VD0} = k_{3D}$$

$$K_{VD1} = \frac{i_D V}{2\pi K_{PD}} + k_{4D}$$

$$K_{VD2} = \frac{b_D 2\pi \beta}{i_D K_{PD}} + \frac{m \cos\varphi_A}{c_{DL}}(l \cdot k_{1D} + k_{3D})$$

$$K_{VD3} = \frac{(4 c_{DL}\beta\pi^2 \cos^2\varphi_A (J_D + m_K l^2) + \cos\varphi_A m i_D^2 V)}{2\pi c_{DL} i_D K_{PD}} +$$

$$\frac{m\cos\varphi_A}{c_{DL}^2}(c_{DL}(lk_{2D} + k_{4D}) - b_{DL}(lk_{1D} + k_{3D}))$$

$$K_{VD4} = \frac{m\cos\varphi_A(-b_{DL}i_D^2 V + 4\pi^2 \beta c_{DL} b_D)}{2 c_{DL}^2 i_D K_{PD}\pi} - \frac{m\cos\varphi_A}{c_{DL}^3}(c_{DL}m(\cos\varphi_A - 1)(lk_{1D} + k_{3D}) +$$

$$- c_{DL}b_{DL}(lk_{2D} + k_{4D}) + b_{DL}^2(k_{3D} + lk_{1D}))$$

$$(28)$$

for the pilot control intensifications $K_{VD0}$ to $K_{VD4}$ of the pilot control block 71.

This has the advantage that these pilot control intensifications are now dependent on the model parameters. In the case of the model according to equations (6) to (12) the system parameters are $K_{PD}$, $i_D$, V, l, $\varphi_A$, $\beta$, $J_D$, m, $m_K$, $c_{DL}$, $b_{DL}$, $b_D$.

The change in model parameters such as the angle of elevation $\varphi_A$ and the ladder length l can be taken into account immediately in the change to the pilot control intensifications. Therefore, these can always be tracked as a function of the measured values of $\varphi_A$ and l. In other words, if a different run-out length l of the ladder unit is started with the run-out/run-in axis, the pilot control intensifications of the axis of rotation change automatically as a result, so the oscillation-damping behaviour of the pilot control during travel of the cage is retained.

Furthermore, the pilot control intensifications can be adapted very quickly when a transfer is made to a different type of turntable ladder with different technical data (such as e.g. changed m).

The parameters $K_{PD}$, $i_D$, V, $\beta$, m, $m_K$, are given in the information sheet regarding technical data. A mean value or a measured value obtained from sensor data is assumed for the cage mass. In principle, the parameters l, $\varphi_A$ are determined from sensor data as changing system parameters. The parameters $J_D$, $c_{DL}$ are known from FEM tests. The damping parameters $b_{DL}$, $b_D$ are determined from frequency response measurements.

The set control voltage of the proportional valve for the axis of rotation, while taking into account the pilot control 71, is then

$$u_{Dref} = u_{Dpilot} - u_{Djerk} \qquad (40)$$

Therefore, the pilot control intensifications which guarantee vibration-free and path-accurate travel of the cage in the direction of rotation based on the idealised model are known from equation (28).

As only linear system portions can be taken into account in the status model according to equations 6 to 12, static non-linearities of the hydraulics in block 75 of the hydraulic compensation can optionally be taken into account in such a way that linear system behaviour is produced in relation to the system input. The most important non-linear effects of the hydraulics are the play of the proportional valve about the zero point and hysteresis effects of the subordinate conveying power control. For this purpose, the static characteristic curve between control voltage $u_{StD}$ of the proportional valve and the resulting conveying power $Q_{FD}$ is recorded experimentally. The characteristic curve can be described by a mathematical function

$$Q_{FD} = f(u_{StD}) \tag{41}$$

Linearity is now demanded in relation to the system input. In other words, the proportional valve and the hydraulic compensation block are to have the following transmission behaviour summarised in accordance with equation (5)

$$Q_{FD} = K_{PD}u_{StD} \tag{42}$$

If the compensation block 75 has the static characteristic curve

$$u_{StD} = h(u_{Dref}) \tag{43}$$

then the condition (42) is met exactly when

$$h(u_{Dref}) = f^{-1}(K_{PD}u_{Dref}) \tag{44}$$

is chosen as static compensation characteristic curve.

Thus, the individual components of the axis controller for the axis of rotation are described. In conclusion, the combination of path planning module and rotation axis controller meets the requirement of a vibration-free and path-accurate movement with the axis of rotation.

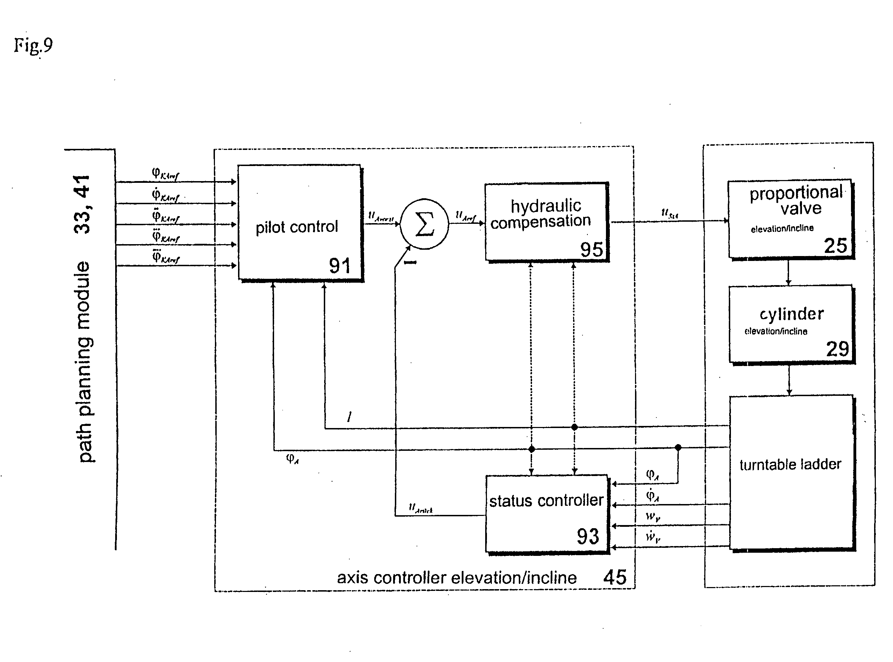

Based on these results, the axis controller for the elevation/incline 7 axis will now be described. Fig. 9 shows the basic structure of the axis controller elevation/incline.

As with the axis of rotation, at least one of the measured variables: angle of elevation $\varphi_A$, elevation angular velocity $\dot{\varphi}_A$, bending of the ladder unit in the vertical direction $w_v$ or the derivative of the vertical bending $\dot{w}_v$ is intensified and fed back to the control input to dampen vibrations of the ladder parts via a status controller block. The derivative of the measured variables $\varphi_A$ and $w_v$ is formed numerically in the microprocessor control. The basis for determining the controller intensifications is the dynamic model which is derived in the following sections for the elevation/incline axis.

In order to also achieve path-accurate travel in addition to damping of vibrations of the ladder parts, the status controller is supplemented by a pilot control and the path planning.

The output functions of the path planning module in the form of the set cage position in the direction of the elevation/incline axis and their derivatives (velocity, acceleration, jerk and derivative of the jerk) are passed to the pilot control block 91 (block 71 in the axis of rotation). These functions are intensified in the pilot control block in such a way that path-accurate travel of the ladder without vibrations is produced under the idealised preconditions of the dynamic model. The basis for determining the pilot control intensifications is in turn the dynamic model of the type used for the design of the controller intensifications. Therefore, vibrating of the turntable ladder is suppressed under these idealised preconditions and the cage follows the path generated.

Owing to the dominant static non-linearity of the hydraulic drive units (hysteresis, play), the value formed from pilot control $u_{Apilot}$ and optionally status controller output $u_{Ajerk}$ is now changed for the control input $u_{Aref}$ in the hydraulic compensation block 95 (similar to block 75) in such a way that linear behaviour of the entire system can be assumed. The output of the block 95 (hydraulic compensation) is the corrected control variable $u_{StA}$. This value is then passed to the proportional valve of the hydraulic circuit for the cylinder of the elevation/incline axis.

The derivation of the dynamic model for the axis of elevation will now serve to explain the mode of operation in detail, which derivation is the basis for calculating the pilot control intensifications and the status controller.

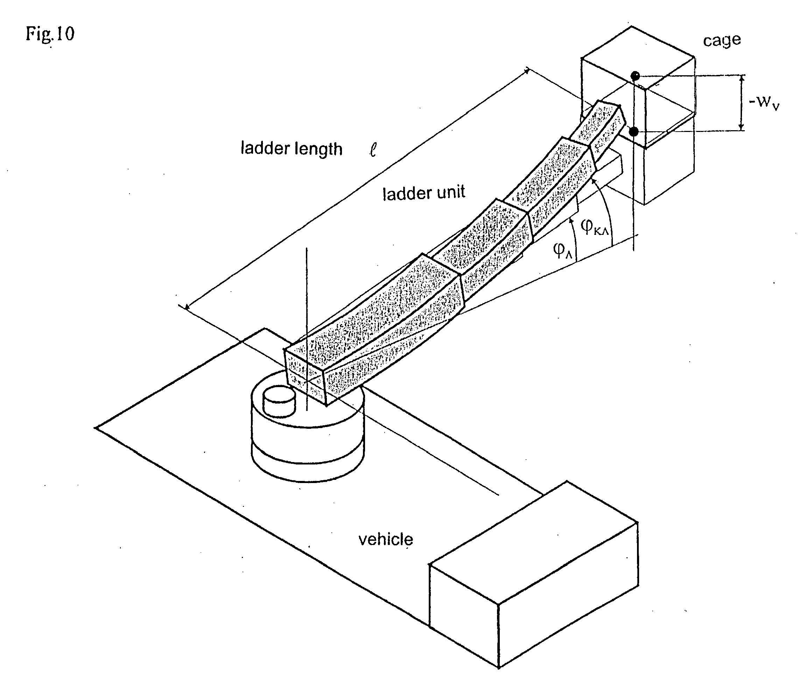

For this purpose, Fig. 10 provides descriptions for the definition of the model variables. The connection shown there between the angle of elevation position $\varphi_A$ of the ladder mechanism in relation to the inertial system with the unit vectors $\underline{e}_{11}$ to $\underline{e}_{13}$ and the cage angle of elevation position $\varphi_{KA}$, which, owing to bending $w_v$, is calculated in accordance

with the equation

$$\varphi_{KA} = \varphi_A - \frac{w_v}{l} \qquad (45)$$

for small bends, is essential in this case. This dynamic system can be described by the following differential equations.

$$(J_A(l) + m_k l^2) \cdot \ddot{\varphi}_A - m l \cdot \ddot{w}_v = M_{MA} + m l \cdot g \cos\varphi_A - b_A \dot{\varphi}_A$$

$$-m l \cdot \ddot{\varphi}_A + m \cdot \ddot{w}_v + b_{AL} \cdot \dot{w}_v + c_{AL}(l) \cdot w_v = 0 \qquad (46)$$

$J_A$ is the moment of inertia of the ladder unit about the axis of elevation. $M_{MA}$ is the driving torque of the hydraulic cylinder on the ladder. $b_A$ is the viscous friction in the hydraulic cylinder. The first equation of (4) substantially describes the movement equation in relation to the elevation kinematics with the driving hydraulic cylinder of the ladder, the reaction owing to bending of the ladder unit being taken into account. The second equation of (4) is the movement equation which describes the bending $w_v$, stimulation of the bending vibration being caused by raising or inclining the ladder unit via the angular acceleration or an external disturbance, expressed by initial conditions for these differential equations. In the second equation of (4) the parameter $c_{AL}$ is the stiffness of the ladder unit and $b_{AL}$ the damping constant for the ladder vibration in the direction of the elevation/incline axis. A function is calculated for the stiffness as a function of l from FEM simulations as this stiffness is highly dependent on the run out state of the ladder unit l. Therefore, $c_{AL}(1)$ is always to be assumed hereinafter for $c_{AL}$. This also applies to the moment of inertia $J_A$ calculated from constructional data which is also a function dependent on l. The parameters not mentioned can be inferred from the details relating to equation 4 of the axis of rotation.

The hydraulic drive is described by the following equations

$$M_{MA} = F_{cyl} d_b \cos\varphi_p(\varphi_A)$$

$$F_{cyl} = p_{cyl} A_{cyl}$$

$$\dot{p}_{cyl} = \frac{2}{\beta V'_{cyl}} (Q_{FA} - A_{cyl} \dot{z}_{cyl}(\varphi_A, \dot{\varphi}_A)) \qquad (47)$$

$$Q_{FA} = K_{PA} u_{StA}$$

$F_{cyl}$ is the force of the hydraulic cylinder on the piston rod, $p_{cyl}$ is the pressure in the cylinder (depending on the direction of movement at the piston or ring side). $A_{cyl}$ is the cross-sectional area of the cylinder (depending on the direction of movement at the piston or ring side), $\beta$ is the oil compressibility, $V_{cyl}$ is the cylinder volume, $Q_{FA}$ is the conveying power in the hydraulic circuit for raising and inclining and $K_{PA}$ is the proportionality constant which provides the connection between conveying power and control voltage of the proportional valve. Dynamic effects of the subordinate conveying power control are ignored. Half the entire volume of the hydraulic cylinder is assumed as relevant cylinder volume in the oil compression in the cylinder. $z_{cyl}$, $\dot{z}_{cyl}$ are the position and the velocity of the cylinder rod. These and the geometric parameters $d_b$ and $\varphi_p$ are dependent on the elevation kinematics.

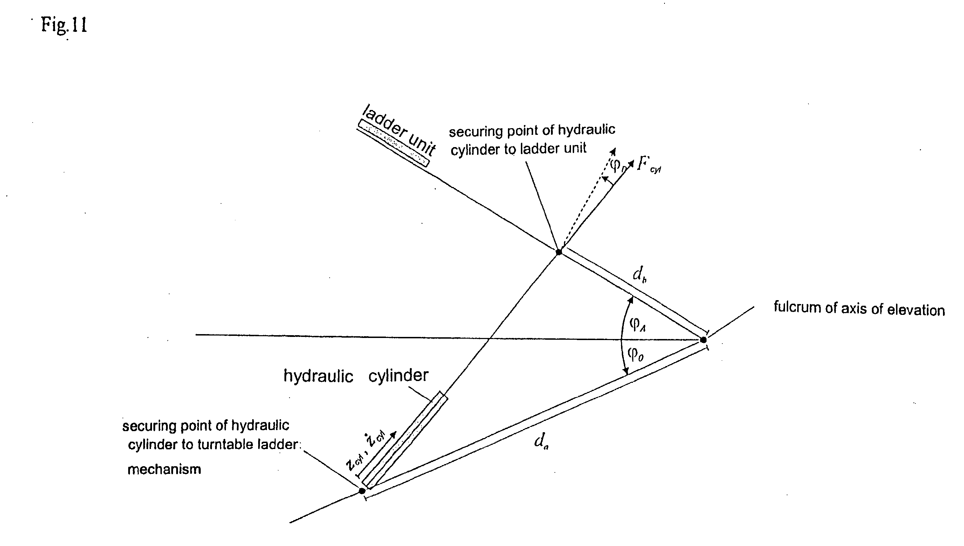

Fig. 11 shows the elevation kinematics of the axis of elevation. The hydraulic cylinder is anchored to the lower end in the turntable ladder mechanism. The spacing $d_a$ between this point and the fulcrum of the ladder unit about the axis of elevation can be inferred from construction data. The piston rod of the hydraulic cylinder is secured to the ladder unit at a spacing $d_b$. $\varphi_0$ is also known from construction data. The following connection between angle of elevation $\varphi_A$ and the hydraulic cylinder position $z_{cyl}$ can be derived therefrom.

$$z_{cyl} = \sqrt{d_a^2 + d_b^2 - 2d_b d_a \cos(\varphi_A + \varphi_0)} \qquad (48)$$

As only the angle of elevation $\varphi_A$ is a measured variable, the inverse relation of (48) and the dependency between piston rod velocity $\dot{z}_{cyl}$ and elevation velocity $\dot{\varphi}_A$ are also of interest.

$$\varphi_A = \arccos\left(\frac{d_a^2 + d_b^2 - z_{cyl}^2}{2 d_a d_b}\right) - \varphi_0 \qquad (49)$$

$$\dot{\varphi}_A = \frac{\partial \varphi_A}{\partial z_{cyl}} \dot{z}_{cyl} = \frac{\sqrt{d_a^2 + d_b^2 - 2d_b d_a \cos(\varphi_A + \varphi_0)}}{d_b d_a \sin(\varphi_A + \varphi_0)} \dot{z}_{cyl}$$

$$(50)$$

The projection angle $\varphi_p$ must also be calculated in order to calculate the effective moment on the ladder unit.

$$\cos \varphi_p = \frac{d_a \sin(\varphi_A + \varphi_0)}{\sqrt{d_a^2 + d_b^2 - 2d_b d_a \cos(\varphi_A + \varphi_0)}} = \frac{h_1}{h_2} \qquad (51)$$

As a result, the dynamic model of the axis of elevation described in equations 46 to 51 can now be transformed into the status representation (see also O. Föllinger: Regelungstechnik [Control Engineering], 7th Edition, Hüthig Verlag. Heidelberg 1992). The following status representation of the system is produced.

$$\text{status representation:} \quad \dot{\underline{x}}_A = \underline{A}_A \underline{x}_A + \underline{B}_A \underline{u}_A$$
$$\underline{y}_A = \underline{C}_A \underline{x}_A \qquad (52)$$

with:

$$\text{status vector:} \quad \underline{x}_A = \begin{bmatrix} w_v \\ \dot{w}_v \\ \varphi_A \\ \dot{\varphi}_A \\ M_{MA} \end{bmatrix} \qquad (53)$$

$$\text{control variable:} \quad u_A = u_{StA} \qquad (54)$$

output variable: $y_A = \varphi_{KA}$ (55)

system matrix:

$$\underline{A}_A = \begin{bmatrix} 0 & 1 & 0 & 0 & 0 \\ -\dfrac{c_{AL}J_{AK}}{m(J_{AK}-ml^2)} & -\dfrac{b_{AL}J_{AK}}{m(J_{AK}-ml^2)} & 0 & -\dfrac{b_A l}{(J_{AK}-ml^2)} & \dfrac{l}{(J_{AK}-ml^2)} \\ 0 & 0 & 0 & 1 & 0 \\ -\dfrac{c_{AL}l}{(J_{AK}-ml^2)} & -\dfrac{b_{AL}l}{(J_{AK}-ml^2)} & 0 & -\dfrac{b_A}{(J_{AK}-ml^2)} & \dfrac{1}{(J_{AK}-ml^2)} \\ 0 & 0 & 0 & -\dfrac{2A_{cyl}^2}{\beta V_{cyl}}\dfrac{(d_b d_a \sin(\varphi_A+\varphi_0))^2}{(d_a^2+d_b^2-2d_b d_a \cos(\varphi_A+\varphi_0))} & 0 \end{bmatrix}$$

$$J_{AK}(l) = J_A(l) + m_K l^2$$ (56)

control vector:

$$\underline{B}_A = \begin{bmatrix} 0 \\ 0 \\ 0 \\ 0 \\ \dfrac{2A_{cyl}d_b d_a \sin(\varphi_A+\varphi_0)K_{PA}}{V_{cyl}\beta\sqrt{d_a^2+d_b^2-2d_b d_a \cos(\varphi_A+\varphi_0)}} \end{bmatrix}$$ (57)

output vector: $\underline{C}_A = \begin{bmatrix} -\dfrac{1}{l} & 0 & 1 & 0 & 0 & 0 \end{bmatrix}$ (58)

The dynamic model of the axis of rotation is regarded as a variable-parameter system in relation to the run-out length l and the trigonometric functional portions of the angle of elevation $\varphi_A$. The equations (52) to (58) are the basis for the design of the pilot control 91 and the status controller 93 now described.

Owing to the introduction of the status controller block 93 with the feedback to the control input

$$u_{Aref} = -u_{Ajerk}$$ (58a)

equation (52) changes to:

$$\dot{\underline{x}}_A = (\underline{A}_A - \underline{B}_A\underline{K}_A)\underline{x}_A$$ (58b)

$$\underline{y}_A = \underline{C}_A\underline{x}_A$$

The controller feedback 93 is designed as status controller. The controller intensifications are calculated in the same way as in equations 29 to 39 for the axis of rotation.

The components of the status vector $\underline{x}_A$ are weighted with the controller intensifications $k_{iA}$ of the controller matrix $\underline{K}_4$ and fed back to the control input of the path.

As with the axis of rotation, the controller intensifications are determined by coefficient comparison of the polynomials in the same way as in equation 35

$$\det(s\underline{I} - \underline{A}_A + \underline{B}_A \cdot \underline{K}_A) \equiv \prod_{i=1}^{n} (s-r_i)$$

$$(69a)$$

As the model of the axis of elevation has the order n = 5, like that of the axis of rotation, the polynomials in equation 69a are also of the fifth order. In the case of the model according to equations 52 to 58, the following linear equation system is produced as a function of the control intensifications $k_{iA}$:

$$a_4(k_{5A}) - p_4 = 0$$
$$a_3(k_{5A}, k_{4A}, k_{2A}) - p_3 = 0$$
$$a_2(k_{5A}, k_{4A}, k_{3A}, k_{1A}) - p_2 = 0$$
$$a_1(k_{5A}, k_{4A}, k_{3A}) - p_1 = 0$$
$$a_0(k_{3A}) - p_0 = 0$$

$$(70)$$

wherein $p_i$ ($p_0$ to $p_4$) are the coefficients of the polynomial defined by the zero positions $r_i$.

The $r_i$ are selected in such a way that the system is stable, the control operates sufficiently quickly with good damping and the control variable restriction is not achieved with typically occurring control deviations. The $r_i$ can be determined in simulations in accordance with these criteria prior to commissioning.

Evaluation of the equation system (70) now provides analytical mathematical expressions for the controller intensifications as a function of the desired poles $r_i$ and the system parameters. In the case of model according to equations 52 to 58 the system parameters are $K_{PA}$, $A_{cyl}$, $V_{cyl}$, $\varphi_A$, $\beta$, $J_A$, m, $m_K$, $c_{AL}$, $b_{AL}$, $b_A$, $d_b$, $d_a$. A dependence on the parameter 1 is given via the dependence of the parameters $J_A$, $C_{AL}$ on the ladder length. As with the axis of rotation, parameter changes in the system, such as run-out length l or the angle of elevation $\varphi_A$, can be taken into account immediately in changed controller intensifications. This is of critical importance for optimised controller behaviour.

As with the axis of rotation, the status controller can also be designed as output feedback. In this case, only the status variables detected by measuring are fed back. There are therefore individual $k_{iA}$ at zero. In the case of the model according to equations 52 to 58, measurement of the drive moment of the hydraulic cylinder can, for example, be dispensed with. Therefore, $k_{5A} = 0$. $k_{1A}$ to $k_{4A}$ can be calculated according to equation (70) despite this. In addition, it may be sensible owing to the not inconsiderable degree of calculation complexity to calculate the controller parameters for a fixed operating point of the system and to ignore the tracking of the controller parameters upon deviation from this operating point as a function of the angle of elevation and of the run-out length. In both cases, however, the actual inherent value position of the system with the controller matrix

$$\underline{K}_A = [k_{1A} \; k_{2A} \; k_{3A} \; k_{4A} \; 0] \qquad (71)$$

must be numerically checked by means of the calculation identical to that in equation 31. As this can only be done numerically, the entire extent covered by the changing system parameters l and $\varphi_A$ must be incorporated. These parameters fluctuate in the interval $[l_{min}, l_{max}]$ or $[\varphi_{Amin}, \varphi_{Amax}]$. In these intervals, a plurality of support points $l_i$ and $\varphi_{Aj}$ are selected and the system matrix $\underline{A}_{Aij}(l_i, \varphi_{Aj})$ is calculated for all possible combinations of these changing system parameters and inserted in the same way as in equation 31 and evaluated with $\underline{K}_A$ from equation 71:

$$\det(s\underline{I} - \underline{A}_{ij} + \underline{B}_A \cdot \underline{K}_A \equiv 0 \qquad \text{for all } i, j \qquad (72)$$

If all zero points of (72) are always less than zero, the stability of the system is ensured and the originally selected poles $r_i$ can be retained. If this is not the case, then a correction to the poles $r_i$ according to equation (69) may be necessary.

Upon feedback of $w_v$ $\dot{w}_v$ $\varphi_A$ $\dot{\varphi}_A$ the output of the status controller block 93 is then

$$u_{Ajerk} = k_{1A} w_v + k_{2A} \dot{w}_v + k_{3A} \varphi_A + k_{4D} \dot{\varphi}_A \qquad (73)$$

If a pilot control block 91 is now developed to supplement the control, the portion of reference variables which are suitably weighted in the pilot control block 91 are added to the feedback via the status controller in accordance with equation 58a. By taking into account the pilot control 91, the set control voltage of the proportional valve for the axis of rotation is then similar to equation 58a

$$u_{Aref} = u_{Apilot} - u_{Ajerk} \qquad (74)$$

Equation 52 then becomes

$$\dot{\underline{x}}_A = (\underline{A}_A - \underline{B}_A\underline{K}_A)\underline{x}_A + \underline{B}_A\underline{S}_A\underline{w}_A$$

$$\underline{y}_A = \underline{C}_A\underline{x}_A \qquad (58b)$$

Input variables of the pilot control block 91 are the set angle position $\varphi_{KA}$, the set angular velocity $\dot{\varphi}_{KA}$, the set angular acceleration $\ddot{\varphi}_{KA}$, the set jerk $\dddot{\varphi}_{KA}$ and optionally the derivative of the set jerk. The reference variable $\underline{w}_A$ is therefore similar to (13)

$$\underline{w}_A = \begin{bmatrix} \varphi_{KAref} \\ \dot{\varphi}_{KAref} \\ \ddot{\varphi}_{KAref} \\ \dddot{\varphi}_{KAref} \\ \left(\ddddot{\varphi}_{KAref}\right) \end{bmatrix} \qquad (59)$$

The components of $\underline{w}_A$ are weighted with the pilot control intensifications $K_{VA0}$ to $K_{VA4}$ in the pilot control block 91 and their sum is passed to the control input. The pilot control matrix is defined by

$$\underline{S}_A = [K_{VA0} \; K_{VA1} \; K_{VA2} \; K_{VA3} \; K_{VA4}] \qquad (61)$$

If the matrix equation (58b) is evaluated then it can be written as algebraic equation for the pilot control block, wherein $u_{Apilot}$ is the uncorrected set control voltage for the proportional valve based on the idealised model.

$$u_{Apilot} = K_{VA0}\varphi_{KAref} + K_{VA1}\dot{\varphi}_{KAref} + K_{VA2}\ddot{\varphi}_{KAref} + K_{VA3}\dddot{\varphi}_{KAref} (+K_{VA4}\ddddot{\varphi}_{KAref}) \qquad (62)$$

$K_{VA0}$ to $K_{VA4}$ are the pilot control intensifications which are calculated as a function of the current angle of elevation $\varphi_A$ and the run-out length 1 of the ladder unit such that the cage follows the set trajectory path-accurately without vibrations.

The pilot control intensifications $K_{VA0}$ to $K_{VA4}$ are calculated as follows. In relation to the cage angle $\varphi_{KA}$ control variable, the transmission function can be calculated, without pilot control block, and with status controller block as follows from the status equations (52) to (58) in accordance with the equation

$$G_{AR}(s) = \frac{\varphi_{KA}(s)}{u_{Apilot}(s)} = \underline{C}_A(s\underline{I} - \underline{A}_A + \underline{B}_A\underline{K}_A)^{-1}\underline{B}_A \qquad (68)$$

The transmission function between output pilot control block and cage position can be calculated with equation (68) in a similar way to equation (26). By taking into account the pilot control block 91 in equation (68), a relationship similar to equation (27) is obtained which after multiplying out has the form

$$\frac{\varphi_{KA}}{\varphi_{KAref}} = \frac{...b_2(K_{VAi}) \cdot s^2 + b_1(K_{VAi}) \cdot s + b_0(K_{VAi})}{...a_2 \cdot s^2 + a_1 \cdot s + a_0}. \qquad (64)$$

After taking into account the pilot control 91 in equation 68, the pilot control intensifications $K_{VAi}$ ($K_{VA0}$ to $K_{VA4}$) can be calculated in accordance with the condition of equation 21. This again leads to a linear equation system which can be solved in analytical form in accordance with the pilot control intensifications $K_{VA0}$ to $K_{VA4}$ sought. It is noted, however, that the coefficients $b_i$ and $a_i$ are now also dependent on the known controller intensifications $k_{1A}$, $k_{2A}$, $k_{3A}$, $k_{4A}$, of the status controller in addition to the pilot control intensifications $K_{VA0}$ to $K_{VA4}$ sought.

By taking into account the status controller block 93, similar to equation 28 with the axis of rotation,

$$K_{VA0} = k_{3A}$$

$$K_{VA1} = \frac{A_{cyl}h_2 d_b}{K_{PA}h_1} + k_{4A}$$

$$K_{VA2} = \frac{b_A \beta V_{cyl}h_1}{2d_b A_{cyl}K_{PA}h_2} - \frac{m}{c_{AL}}k_{3A} + \frac{ml}{c_{AL}}k_{1A}$$

$$K_{VA3} = \frac{J_{AK}c_{AL}\beta V_{cyl}h_1^2 - 2mA_{cyl}^2 d_b^2 h_2^2}{2c_{AL}A_{cyl}K_{PA}h_2 h_1 d_b} + \frac{m(lk_{2A} - k_{4A})}{c_{AL}} + \frac{mb_{AL}(-lk_{1A} + k_{3A})}{c_{AL}^2}$$

$$K_{VA4} = \frac{-mc_{AL}b_A \beta V_{cyl}h_1^2 + 2mA_{cyl}^2 d_b^2 h_2^2 b_{AL}}{2c_{AL}^2 A_{cyl}K_{PA}h_2 d_b h_1} + \frac{2m^2(k_{3A} - lk_{1A})}{c_{AL}^2} + \qquad (69)$$

$$\frac{mb_{AL}(k_{4A} - lk_{2A})}{c_{AL}^2} + \frac{mb_{AL}^2(lk_{1A} - k_{3A})}{c_{AL}^3}$$

wherein

$$h_1 = \sqrt{d_a^2 + d_b^2 - 2d_b d_a \cos(\varphi_A + \varphi_0)} \tag{66}$$

$$h_2 = d_a \sin(\varphi_A + \varphi_0)$$

are obtained for the pilot control intensifications $K_{VA0}$ to $K_{VA4}$ of the pilot control block 91.

With equation 69, the pilot control intensifications are now also known which guarantee vibration-free and path-accurate travel of the cage in the direction of elevation or incline of the ladder based on the idealised model and taking into account the status controller block 93.

As already shown with the axis of rotation, this has the advantage that the pilot control intensifications and controller intensifications of the status controller are produced as a function of the model parameters. In the case of the model according to equations 52 to 58 the system parameters are $K_{PA}$, $A_{cyl}$, $V_{cyl}$, $\varphi_A$, $\beta$, $J_A$, $m$, $m_K$, $c_{AL}$, $b_{AL}$, $b_A$, $d_b$, $d_a$. A dependence on the parameter l is also given via the dependence of the parameter $J_A$, $c_{AL}$ on the ladder length.

As a result, the change in model parameters such as the angle of elevation $\varphi_A$ and the ladder length l can be taken into account immediately in the change to the pilot control and controller intensifications. Therefore, these can always be tracked as a function of the measured values of $\varphi_A$ and l. In other words, if a different run-out length l of the ladder unit is started with the run-out/run-in axis, the pilot control intensifications of the axis of rotation change automatically as a result, so the oscillation-damping behaviour of the pilot control during travel of the cage is retained.

Furthermore, the pilot control intensifications can be adapted very quickly when a transfer is made to a different type of turntable ladder with different technical data (such as e.g. changed m).

The parameters $K_{PA}$, $A_{cyl}$, $V_{cyl}$, $\beta$, $m$, $m_K$ $d_b$, $d_a$, are given in the information sheet regarding technical data. A mean value or a measured value obtained from sensor data is assumed for the cage mass. In principle, the parameters l, $\varphi_A$ are determined from sensor data as changing system parameters. The parameters $J_A$, $c_{AL}$ are known from FEM tests. The damping parameters $b_{AL}$, $b_A$ are determined from frequency response measurements.

As with the axis of rotation, non-linearities of the hydraulics in block 95 of the hydraulic compensation can optionally be compensated so linear system behaviour in relation to the system input is produced. With the axis of elevation, in addition to the valve play and the hysteresis, correction factors for the control voltage can be provided in relation to the run-out length l and the angle of elevation $\varphi_A$ and for the intensification factor $K_{PA}$ and the relevant cylinder diameter $A_{cyl}$. As a result, a direction-dependent structural change-over of the axis controller can be avoided.

To calculate the necessary compensation function, the static characteristic curve between control voltage $u_{StD}$ of the proportional valve and the resulting conveying power $Q_{FD}$ is recorded experimentally, this time also as a function of l, $\varphi_A$. The characteristic curve can be described by a mathematical function

$$Q_{FA} = f(u_{StA}, l, \varphi_A) \tag{75}$$

Linearity it now demanded in relation to the system input. In other words, the proportional valve and the hydraulic compensation block are to have the following transmission behaviour summarised in accordance with equation (47)

$$Q_{FA} = K_{PA} u_{StA} \tag{76}$$

If the compensation block 95 has the static characteristic curve

$$u_{StA} = h(u_{Aref}, l, \varphi_A) \tag{77}$$

then condition (76) is met accurately when

$$h(u_{Aref}) = f^{-1}(K_{PA} u_{Aref}, l, \varphi_A) \tag{78}$$

is chosen as static compensation characteristic curve.

Thus, the individual components of the axis controller for the axis of elevation are described. Consequently, the combination of path planning module and elevation/incline axis controller meet the requirement of a vibration-free and path-accurate movement of the cage during raising and inclining.

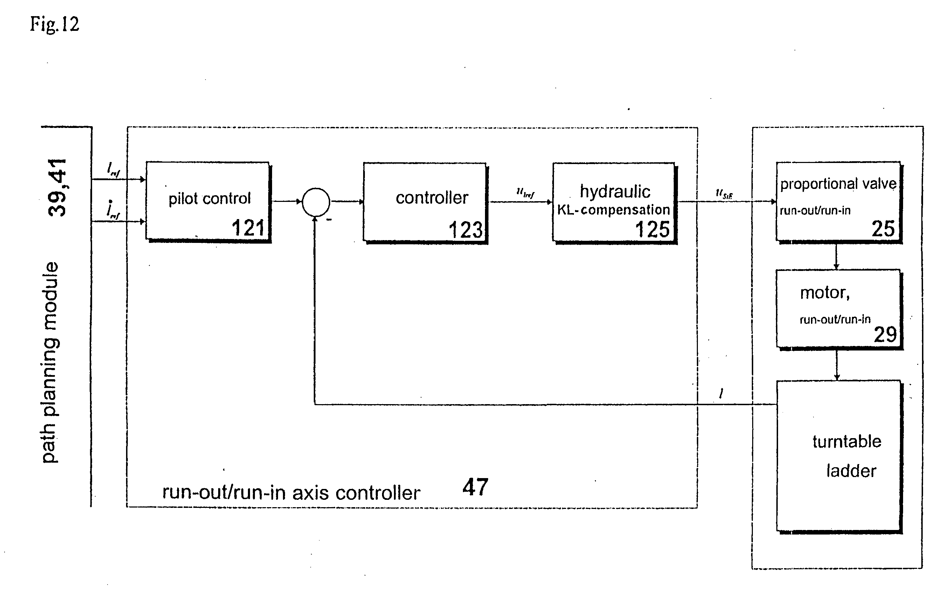

The structure of the axis controller for the axis for extending and retracting the ladder will now be explained below. Fig. 12 shows the structure of the axis controller. In contrast to the rotation 43 and elevation/incline 45 axis controllers, the axis controller of the run-out/run-in axis 47 is equipped with a conventional cascade control with an external control loop for the position and an internal control loop for the velocity as this axis has only a low tendency to vibrate.

Only the time functions set position of the run-out/run-in axis $l_{ref}$ and the set velocity $\dot{l}_{ref}$ are required by the path planning module 39 and 41 to control the axis controller. These are weighted in a pilot control block 121 in such a way that quickly-responding system behaviour which is accurate in relation to the position when stationary results. As the set-actual comparison between reference variable $l_{ref}$ and measured variable I takes place directly behind the pilot control block, the steady state in relation to the position is achieved when the pilot control intensification is for the position 1. The pilot control intensification for the set velocity $\dot{l}_{ref}$ is to be determined such that subjectively quick but well attenuated response behaviour is produced when the hand lever is operated. The controller 123 for the position control loop can be designed as proportional controller (P controller) . The control intensification is to be determined according to the criteria of stability and sufficient damping of the closed control circuit. The output variable of the controller 123 is the ideal control voltage of the proportional valve. As with the rotation 43 and elevation/incline 45 axis controllers, the non-linearities of the hydraulics are compensated in a compensation block 125. Calculation is made as with the axis of rotation (equations 42 to 44). The output variable is the corrected control voltage of the proportional valve $u_{StE}$. The inner control loop for the velocity is the subordinate conveying power control of the hydraulic circuit.

The last axis of the turntable ladder is the level axis which ensures that even when the vehicle is erected on sloping ground the ladder mechanism always remains horizontal during rotation.

In order to detect the vehicle incline, an electrolyte sensor is installed in the turntable ladder mechanism and indicates the degree of tilting of the turntable ladder mechanism in relation to the inertial system in two directions which are perpendicular to one another. These two angles are designated $\varphi_{Nx}$ and $\varphi_{Ny}$. Only the angle $\varphi_{Nx}$ is critical in order to keep the ladder constantly exactly aligned vertically as the second angle of orientation corresponds to the elevation/incline axis. In order to compensate the incline two hydraulic cylinders are mounted between the live ring and turntable ladder mechanism which can tilt the turntable ladder mechanism by an angle $\varphi_{Nrel}$ with respect to the vehicle. The object of the control is to keep the angle $\varphi_{Nx}$ in relation to the inertial system constantly at zero during rotation, in other words to produce parallel alignment in relation to the inertial system. Before the ladder is laid down, it must be brought into vehicle-parallel alignment again. For this purpose, the angle sensors $\varphi_{Nx}$ and $\varphi_{Ny}$ are read out in the laying down state before the ladder is run-out and this value is stored as vehicle incline $\varphi_{FNx}$ and $\varphi_{FNy}$. The value $\varphi_{FNx}$ is therefore the incline of the vehicle about the longitudinal axis, $\varphi_{FNy}$ the incline about the axis transverse to the direction of travel. Before the ladder is laid down, these values are used to bring the ladder into vehicle-parallel alignment again.

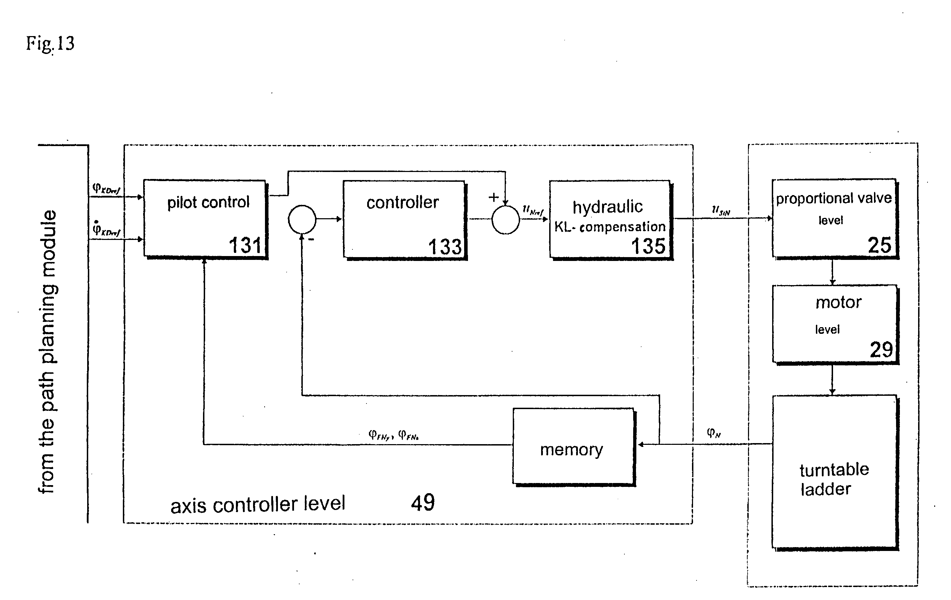

Fig. 13 shows the structure of the axis controller for the level axis. The structure with a cascade controller with an external control loop for the position and an inner control loop for the velocity corresponds to the run-out/run-in axis.

The pilot control 131 is dispensed with in the basic expansion stage. During operation of the ladder with active level adjustment, the set value is always assumed to be zero in relation to $\varphi_{Nx}$. The controller 133 converts the set-actual value difference between the current measured value $\varphi_{Nx}$, the set value zero, into a control voltage $u_{Nref}$. The controller is designed as proportional controller. The control intensification is to be determined according to the criteria of stability and sufficient damping of the closed control circuit. The output variable of the controller 133 is the ideal control voltage of the proportional valve. As with the other axis controllers, the non-linearities of the hydraulics are compensated in a compensation block 135. Calculation is made as in the axis of rotation (equations 42 to 44). The output variable is the corrected control voltage of the proportional valve $u_{StN}$. The subordinate conveying power control of the hydraulic circuit is the inner control loop for the velocity.

If the dynamics of the axis controller are to be improved, the axis controller can be supplemented by a pilot control 131. The time functions $\varphi_{KDref}$ and the set velocity $\dot{\varphi}_{KDref}$ of the axis of rotation relevant to the level axis are required in the pilot control by the path planning module. These are initially converted into set values for the angle of tilt $\varphi_{Nrel}$ in the pilot control block 131 in accordance with

$$\varphi_{Nrelset} = -\varphi_{Nx} \cos\varphi_{KDref} - \varphi_{Ny} \sin\varphi_{KDref} \tag{79}$$

Therefore,

$$\dot{\varphi}_{\text{Nrelset}} = (\varphi_{\text{Nx}} \sin\varphi_{\text{KDref}} - \varphi_{\text{Ny}} \cos\varphi_{\text{KDref}}) \dot{\varphi}_{\text{KDref}} \qquad (80)$$

As a good approximation, it can more simply be assumed for the hydraulic circuit of the level axis that

$$\dot{\varphi}_{\text{Nrel}} = K_{\text{PNtot}} u_{\text{StN}} \qquad (81)$$

wherein $K_{\text{PNtot}}$ is the resulting total intensification of the transmission function between tilt velocity $\dot{\varphi}_{\text{Nrel}}$ and control voltage. If

$$u_{\text{StN}} = \frac{1}{K_{PN}tot} \dot{\varphi}_{\text{Nrelset}} \qquad (82)$$

is now selected the dynamic behaviour is further improved by this pilot control which supplements the controller 133. Before the ladder is laid down, the vehicle angle of tilt $\varphi_{\text{FNx}}$ is passed to the set value for the angle of tilt in relation to the inertial system. Therefore, the level axis, in combination with the axis of rotation, ensures that the ladder is always in a horizontal position during rotation at given vehicle incline.

Therefore, a turntable ladder is achieved, the path control of which allows for path-accurate travel of the cage with all axes and suppresses active vibrations of the ladder unit in the process.

## Claims

1. Turntable ladder or the like comprising a ladder unit, a cage (3), drives, and a control means (31) for the movement of the ladder parts (5),
   **characterised in that** the control means (31) is designed in such a way that when the cage (3) is moved, vibrations of the ladder parts (5) are suppressed **in that** the ladder bending in the horizontal and vertical direction, and at least one of the following measured variables: angle of elevation, angle of rotation, run-out length, and cage mass, are fed back via a controller to the control variables for the drives.

2. Turntable ladder according to claim 1, **characterised in that** the controller (31) is designed as status controller (73) in which the measured value of the measured variables: ladder bending in the horizontal and vertical direction, angle of elevation, angle of rotation, run-out length, cage mass, is intensified by constant intensifications.

3. Turntable ladder according to claim 1, **characterised in that** the controller (31) is designed as status controller (73) in which intensifications of the measured value of the measured variables formed as a function of at least one of the variables: angle of elevation, run-out length, cage mass, are fed back to the control variables of the drives.

4. Turntable ladder according to claim 3, **characterised in that** a weighted intensification of the variables: angle of elevation, run-out length, cage mass takes place.

5. Turntable ladder according to one of claims 1 to 4, **characterised in that** a pilot control is provided which maps the idealised movement behaviour of the ladder in a dynamic model during movement of the cage (3), based on differential equations, and calculates idealised control variables for the drives of the ladder parts for a substantially vibration-free movement of the ladder from the dynamic model.

6. Turntable ladder according to claim 5, **characterised in that** a path planning module (39 or 41) for producing the movement path of the ladder in the work environment is provided and emits the movement path in the form of time functions for the cage position, cage velocity, cage acceleration, cage jerk and optionally derivative of the cage jerk to a pilot control block (71), which controls the drives of the ladder parts.

7. Turntable ladder according to claim 6, **characterised in that** the path planning module (39 or 41) allows kinematic restrictions to be input for the time functions for the cage (3) position, cage velocity, cage acceleration and the cage jerk.

8. Turntable ladder according to claim 7, **characterised in that** the path planning module (39 or 41) also produces the time function for the derivative of the jerk.

9. Turntable ladder according to claim 7 and 8, **characterised in that** the path planning module (39 or 41) contains steepness limiters (61) for taking the kinematic restrictions into account.

10. Turntable ladder according to claim 9, **characterised in that** the path planning module (39 or 41) produces constant functions of the jerk and from these determines by integration the time functions for the cage acceleration, cage velocity and cage position.

11. Turntable ladder according to claim 9 or 10, **characterised in that** the path planning (39 or 41) module comprises a further steepness limiter(63) which reduces the after-run of the cage in the event of an emergency stop.

12. Turntable ladder according to one of the preceding claims, **characterised in that** the axis controller supplies electrical control signals for controlling hydraulic proportional valves (25) of the ladder drives.

13. Turntable ladder according to claim 12, **characterised in that** the drives for rotating the ladder about the vertical axis are provided for raising and lowering the ladder and for extending and retracting the ladder in its longitudinal direction.

**Patentansprüche**

1. Drehleiter oder dergleichen, umfassend eine Leitereinheit, einen Korb (3), Antriebe sowie ein Steuerungselement (31) zur Bewegung der Leiterteile (5),
**dadurch gekennzeichnet, dass** das Steuerungselement (31) auf eine solche Weise ausgestaltet ist, dass wenn der Korb (3) bewegt wird die Vibrationen der Leiterteile (5) so unterdrückt werden, dass die Leiter in horizontaler und vertikaler Richtung gebogen wird und zumindest eine der folgenden gemessenen Variablen über eine Steuerung zu den Steuerungsvariablen für die Antriebe zurückgeführt werden: Winkel der Höhenlage, Winkel der Drehung, Ausfahrlänge und Korbmasse.

2. Drehleiter gemäß Anspruch 1, **dadurch gekennzeichnet, dass** die Steuerung (31) als eine Status-Steuerung (73) ausgestaltet ist, in der der gemessene Wert der gemessenen Variablen der Leiter-Biegung in horizontaler und vertikaler Richtung, des Winkels der Höhenlage, des Winkels der Drehung, der Ausfahrlänge und der Korbmasse durch konstante Verstärkung intensiviert werden.

3. Drehleiter gemäß Anspruch 1, **dadurch gekennzeichnet, dass** die Steuerung (31) als Status-Steuerung (73) ausgestaltet ist, in der die Verstärkung des gemessenen Werts der gemessenen Variablen als Funktion zumindest einer der Variablen Winkel der Höhenlage, Auslauf-Länge, Korbmasse als Funktion ausgebildet sind und zu den Steuerungs-Variablen der Antriebe zurückgeführt werden.

4. Drehleiter gemäß Anspruch 3, **dadurch gekennzeichnet, dass** eine gewichtete Verstärkung der Variablen Winkel der Höhenlage, Auslauf-Länge, Korbmasse eintritt.

5. Drehleiter gemäß einem der Ansprüche 1 bis 4, **dadurch gekennzeichnet, dass** eine Pilot-Steuerung vorgesehen ist, die das idealisierte Bewegungsverhalten der Leiter in einem dynamischen Modell während der Bewegung des Korbs (3) basierend auf Differenzialgleichungen aufnimmt und die idealisierten Steuerungsvariablen für die Antriebe der Leiterteile für eine im Wesentlichen vibrationsfreie Bewegung der Leiter aus dem dynamischen Modell berechnet.

6. Drehleiter gemäß Anspruch 5, **dadurch gekennzeichnet, dass** ein Fahrt-Planmodul (39 oder 41) zur Erzeugung des Bewegungswegs der Leiter im Arbeitsumfeld vorgesehen ist und den Bewegungsweg in der Form von Zeitfunktionen für die Korbposition, die Korbgeschwindigkeit, die Korbbeschleunigung, die Korb-Erschütterung und optional die Ableitung der Korb-Erschütterung zu einem Pilot-Steuerungsblock (71), der die Antriebe der Leiterteile steuert, ausgibt.

7. Drehleiter gemäß Anspruch 6, **dadurch gekennzeichnet, dass** das Weg-Planmodul (39 oder 41) die Eingabe kinematischer Beschränkungen für die Zeitfunktionen der Position des Korbs (3), die Korb-Geschwindigkeit, die Korb-Beschleunigung und die Korb-Erschütterung ermöglicht.

8. Drehleiter gemäß Anspruch 7, **dadurch gekennzeichnet, dass** das Weg-Planmodul (39 oder 41) ebenso die Zeitfunktion für die Ableitung der Erschütterung produziert.

9. Drehleiter gemäß Anspruch 7 und 8, **dadurch gekennzeichnet, dass** das Weg-Planmodul (39 oder 41) Steilheits-Begrenzer (61) zur Berücksichtigung der kinematischen Beschränkungen enthält.

10. Drehleiter gemäß Anspruch 9, **dadurch gekennzeichnet, dass** das Weg-Planmodul (39 oder 41) konstante Funktionen der Erschütterung produziert und aus diesen durch Integration der Zeitfunktionen für die Korb-Beschleunigung die Korb-Geschwindigkeit und Korb-Position bestimmt.

11. Drehleiter gemäß Anspruch 9 oder 10, **dadurch gekennzeichnet, dass** das Weg-Planmodul (39 oder 41) einen weiteren Steilheits-Begrenzer (63) umfasst, der das Nachlaufen des Korbs im Falle eines Notstopps reduziert.

12. Drehleiter gemäß einem der voranstehenden Ansprüche, **dadurch gekennzeichnet, dass** die Achsen-Steuerung elektrische Steuerungssignale zur Steuerung hydraulischer Proportionalventile (25) der Leiterantriebe liefert.

13. Drehleiter gemäß Anspruch 12, **dadurch gekennzeichnet, dass** die Antriebe zum Drehen der Leiter um die vertikale Achse, zum Anheben und Absenken der Leiter und zum Verlängern und Zurückziehen der Leiter in ihrer Längsrichtung zur Verfügung gestellt sind.

**Revendications**

1. Échelle orientable ou analogue comprenant une unité d'échelle, une cage (3), des mécanismes d'entraînement et un moyen de commande (31) pour le déplacement des parties d'échelle (5), **caractérisée en ce que** le moyen de commande (31) est conçu de telle sorte que lorsque la cage (3) est déplacée, des vibrations des parties d'échelle (5) sont supprimées **en ce que** le pliage de l'échelle dans le sens horizontal et vertical, et au moins l'une des variables mesurées suivantes : angle d'élévation, angle de rotation, longueur de la déviation et masse de la cage, sont réintroduits par le biais d'un dispositif de commande vers les variables de commande pour les mécanismes d'entraînement.

2. Échelle orientable selon la revendication 1, **caractérisée en ce que** le dispositif de commande (31) est conçu comme un dispositif de commande de statut (73) dans lequel la valeur mesurée des variables mesurées : pliage de l'échelle dans le sens horizontal et vertical, angle d'élévation, angle de rotation, longueur de la déviation, masse de la cage, est intensifiée par des intensifications constantes.

3. Échelle orientable selon la revendication 1, **caractérisée en ce que** le dispositif de commande (31) est conçu comme un dispositif de commande de statut (73) dans lequel des intensifications de la valeur mesurée des variables mesurées formées en tant que fonction d'au moins l'une des variables : angle d'élévation, longueur de la déviation, masse de la cage, sont réintroduites vers les variables de commande des mécanismes d'entraînement.

4. Échelle orientable selon la revendication 3, **caractérisée en ce qu'**une intensification pondérée des variables : angle d'élévation, longueur de la déviation, masse de la cage, se produit.

5. Échelle orientable selon l'une quelconque des revendications 1 à 4, **caractérisée en ce qu'**une commande de pilotage est prévue, laquelle cartographie le comportement de déplacement idéal de l'échelle dans un modèle dynamique au cours du déplacement de la cage (3), sur la base d'équations différentielles, et calcule des variables de commande idéales pour les mécanismes d'entraînement des parties d'échelle pour un déplacement sensiblement exempt de vibrations de l'échelle à partir du modèle dynamique.

6. Échelle orientable selon la revendication 5, **caractérisée en ce qu'**un module de planification de chemin (39 ou 41) destiné à produire le chemin de déplacement de l'échelle dans l'environnement de travail est prévu et émet le chemin de déplacement sous la forme de fonctions temporelles pour la position de la cage, la vitesse de la cage, l'accélération de la cage, la saccade de la cage et facultativement une dérivée de la saccade de la cage vers un bloc de commande de pilotage (71), qui commande les mécanismes d'entraînement des parties d'échelle.

7.  Échelle orientable selon la revendication 6, **caractérisée en ce que** le module de planification de chemin (39 ou 41) permet à des restrictions cinématiques d'être entrées pour les fonctions temporelles pour la position de la cage (3), la vitesse de la cage, l'accélération de la cage et la saccade de la cage.

8.  Échelle orientable selon la revendication 7, **caractérisée en ce que** le module de planification de chemin (39 ou 41) produit également la fonction temporelle pour la dérivée de la saccade.

9.  Échelle orientable selon les revendications 7 et 8, **caractérisée en ce que** le module de planification de chemin (39 ou 41) contient des limiteurs d'inclinaison (61) destinés à prendre en compte les restrictions cinématiques.

10. Échelle orientable selon la revendication 9, **caractérisée en ce que** le module de planification de chemin (39 ou 41) produit des fonctions constantes de la saccade et à partir de celles-ci, détermine par intégration les fonctions temporelles pour l'accélération de la cage, la vitesse de la cage et la position de la cage.

11. Échelle orientable selon la revendication 9 ou 10, **caractérisée en ce que** le module de planification de chemin (39 ou 41) comprend un limiteur d'inclinaison (63) supplémentaire qui réduit l'après-arrêt de la cage dans le cas d'un arrêt d'urgence.

12. Échelle orientable selon l'une quelconque des revendications précédentes, **caractérisée en ce que** le dispositif de commande d'axe achemine des signaux électriques de commande destinés à commander des soupapes hydrauliques proportionnelles (25) des mécanismes d'entraînement de l'échelle.

13. Échelle orientable selon la revendication 12, **caractérisée en ce que** les mécanismes d'entraînement destinés à mettre l'échelle en rotation autour de l'axe vertical sont prévus pour élever et abaisser l'échelle et pour étendre et rétracter l'échelle dans son sens longitudinal.

Fig. 1

cage's centre of gravity

ladder unit
5

run-out/run-in axis
9    (l)

cage
3

$-w_h$

$w_v$

elevation/incline axis
7    $(\varphi_A)$

$\varphi_D$

angle of elevation $\varphi_A$

ladder mechanism
15

$\varphi_D$

angle of rotation $\varphi_D$

$\varphi_A$

axis of rotation $(\varphi_D)$
11

level axis
13    $(\varphi_N)$

vehicle
1

EP 1 138 868 B1

Fig.2

operator

hand lever

set

path control

31

$w_v$

$w_h$

$l$

$\varphi_A$

$\varphi_D$

$\varphi_N$

$u_{StD}$  $u_{StA}$  $u_{StE}$  $u_{StN}$

hydraulic control

pump

$Q_{FD}$

$\Delta p_D$

$Q_{FA}$

$\Delta p_A$

$Q_{FE}$

$\Delta p_E$

$Q_{FN}$

$\Delta p_N$

proportional valve
rotation  25

proportional valve
elevation/incline 25

proportional valve
run-out/run-in  25

proportional valve
level  25

Motor
rotation  27

cylinder
elevation/incline 29

Motor
run-out/run-in  27

cylinder
level 29

turntable ladder

EP 1 138 868 B1

Fig.3

EP 1 138 868 B1

EP 1 138 868 B1

Fig.4

$$\varphi_{KDref} \quad \left( \dot{\varphi}_{KDref} \right)$$
$$\varphi_{KAref} \quad \dot{\varphi}_{KAref}$$
$$l_{ref} \quad \dot{l}_{ref}$$

path planning module

39,41

$\varphi_{KAref}$

$\dot{\varphi}_{KAref}$

$\ddot{\varphi}_{KAref}$

$\dddot{\varphi}_{KAref}$

$\ddddot{\varphi}_{KAref}$

30

Fig.5

EP 1 138 868 B1

**Fig.6**

Fig.7

Fig.8

mass $m_K$

$-W_h$

$\varphi_A$

$\varphi_{KD}$

$\varphi_D$

81

$M_{MD}$

$\vec{c}_{I3}$

$\vec{c}_{I2}$

$\vec{c}_{I1}$

vehicle

EP 1 138 868 B1

Fig.9

path planning module  33, 41

$\varphi_{K\!Aref}$
$\dot{\varphi}_{K\!Aref}$
$\ddot{\varphi}_{K\!Aref}$
$\dddot{\varphi}_{K\!Aref}$
$\ddddot{\varphi}_{K\!Aref}$

pilot control  91

$u_{Avorst}$

$\Sigma$

$u_{Aref}$

hydraulic compensation  95

$u_{St}$

proportional valve
elevation/incline  25

cylinder
elevation/incline  29

turntable ladder

$\varphi_A$

$u_{Arück}$

status controller  93

$\varphi_A$
$\dot{\varphi}_A$
$w_V$
$\dot{w}_V$

axis controller elevation/incline  45

EP 1 138 868 B1

Fig.10

ladder length $\quad \ell$

ladder unit

cage

$-w_v$

$\varphi_{K\Lambda}$

$\varphi_\Lambda$

vehicle

EP 1 138 868 B1

Fig.11

EP 1 138 868 B1

Fig.12

Fig.13

from the path planning module